# EUROPÄISCHE PATENTSCHRIFT

(11) **EP 3 117 118 B1**
(45) Veröffentlichungstag und Bekanntmachung des Hinweises auf die Patenterteilung: **26.06.2019**
(21) Anmeldenummer: 15709921.9
(22) Anmeldetag: 12.03.2015
(51) Int. Cl.: F16D 65/097, F16D 55/226

(54) **SCHEIBENBREMSE MIT BELAGHALTEBÜGEL UND SICHERUNGSVORRICHTUNG, UND BREMSBELAGSATZ**
DISC BRAKE WITH PAD RETAINING CLIP AND SECURING DEVICE, AND BRAKE PAD SET
FREIN À DISQUE COMPRENANT UN ÉTRIER DE MAINTIEN DE GARNITURE ET DISPOSITIF DE SÉCURITÉ ET JEU DE GARNITURE À FREIN

(30) Priorität: 14.03.2014 DE 102014103543; 22.05.2014 DE 102014107227
(43) Veröffentlichungstag der Anmeldung: 18.01.2017
(73) Patentinhaber: KNORR-BREMSE Systeme für Nutzfahrzeuge GmbH, 80809 München (DE)
(72) Erfinder: PESCHEL, Michael, 82296 Schöngeising (DE); KLINGNER, Matthias, 82272 Moorenweis (DE); WEBER, Ralf, 80992 München (DE); KRAUSE, Oliver, 82515 Wolfratshausen (DE)
(74) Vertreter: Specht, Peter
(86) Internationale Anmeldenummer: PCT/EP2015/055198
(87) Internationale Veröffentlichungsnummer: WO 2015/136045

(56) Entgegenhaltungen:
- DE-A1-102006 002 306
- DE-A1-102007 049 979
- DE-B3-102005 052 436
- DE-U1-202008 013 446

## Beschreibung

Die vorliegende Erfindung betrifft eine Scheibenbremse mit Belaghaltebügel und Sicherungsvorrichtung nach dem Oberbegriff des Anspruchs 1. Die Erfindung bezieht sich auch auf einen Bremsbelagsatz für eine solche Scheibenbremse.

Bremsbeläge von Scheibenbremsen, insbesondere pneumatische Scheibenbremsen, in Fahrzeugen, z.B. Nutzfahrzeugen, werden in so genannten Belagschächten durch einen Belaghaltebügel gehalten. Damit der Belaghaltebügel nicht durch Querkräfte im Fahrzeug aus seiner Position verschoben werden kann, sind zusätzliche Bauelemente notwendig, die nicht nur ein Verschieben des Haltebügels, insbesondere bei Betrieb, verhindern, sondern auch eine Montage und Demontage ermöglichen.

Diese zusätzlichen Bauelemente umfassen z.B. Kombinationen aus Bolzen und Sicherungssplinten, Federelementen und Schrauben. Nach Einsetzen der Bremsbeläge und Montage des Belaghaltebügels kann danach die Anbringung der Bauelemente zur Sicherung vom Mechaniker vergessen werden. Eine Sicherung der Beläge ist damit nur für eine unbestimmte Zeit gegeben, der Fehler ist zwangsläufig nicht auffällig. Der Belaghaltebügel kann im schlimmsten Fall u.U. im Betrieb verrutschen und eine Sicherung der Bremsbeläge beeinträchtigen.

Es sind zahlreiche Vorschläge für derartige Sicherungsbauelemente und Sicherungsvorrichtungen gemacht worden. Ein Beispiel zur Illustration zeigt das Dokument DE 102005045877 B3, ein weiteres wird in dem Dokument DE 202008013446 U1 beschrieben.

Es besteht ein ständiger Bedarf nach erhöhter Funktionssicherheit im Betrieb, geringen Herstellkosten, sowie kürzeren Servicezeiten.

Der Erfindung liegt die Aufgabe zu Grunde, eine verbesserte Scheibenbremse zu schaffen.

Eine weitere Aufgabe besteht darin, einen verbesserten Bremsbelagsatz für eine Scheibenbremse bereitzustellen.

Die Erfindung löst diese Aufgabe durch den Gegenstand des Anspruchs 1. Diese Aufgabe wird auch durch die Gegenstände der Ansprüche 15 und 16 gelöst.

Eine Sicherheitsvorrichtung ist mit einem Stiftelement versehen, welches verschiebbar ist und in eine Eingriffsposition vorgespannt ist. Dadurch ergibt sich eine lösbare Verbindung zu dem Belaghaltebügel, der auf diese Weise ohne Werkzeug ein- und ausbaubar ist. Die Sicherheitsvorrichtung gegen Verschieben des Belaghaltebügels stützt sich an einem Bremsbelag ab, und zwar an dem rückenseitigen Bremsbelag bzw. an dessen Belagträgerplatte. Die Sicherheitsvorrichtung kann auch mit dem Belaghaltebügel oder dem Bremsbelag fest und unverlierbar verbunden sein.

Eine erfindungsgemäße Scheibenbremse für ein Fahrzeug, insbesondere für ein Nutzfahrzeug, umfasst eine Bremsscheibe mit einer Bremsscheibendrehachse, einen Bremssattel, insbesondere ein Schiebesattel, mit einem Zuspannabschnitt und einem Rückenabschnitt, mindestens zwei Bremsbeläge mit jeweils einer mit einer Belaghaltefeder versehenen Belagrückenplatte, die jeweils unter Vorspannung von einem am Bremssattel lösbar befestigten Belaghaltebügel abgestützt sind und von denen ein zuspannseitiger Bremsbelag dem Zuspannabschnitt zugeordnet ist, und ein rückenseitiger Bremsbelag dem Rückenabschnitt zugeordnet ist, sowie eine Sicherheitsvorrichtung zur Sicherung der Position des Belaghaltebügels. Die Sicherheitsvorrichtung weist mindestens ein verschiebbar geführtes Stiftelement auf, welches aus einer Ruheposition in eine Eingriffsposition und zurück verschiebbar ist, wobei das mindestens eine Stiftelement in der Eingriffsposition eine lösbare Verbindung zwischen dem Belaghaltebügel und der Belagrückenplatte des rückenseitigen Bremsbelags bildet.

Das in der rückenseitigen Belagträgerplatte integrierte Stiftelement rastet bei Montage des Belaghaltebügels automatisch in einer zugehörigen Aufnahme ein und ist für Servicearbeiten wieder lösbar, jedoch nicht entfernbar.

Da der rückenseitige Bremsbelag bei Scheibenbremsen mit Schiebesattel keine Relativbewegungen zum Bremssattel aufweist, ist dies von Vorteil.

Die Vorspannung des Stiftelementes kann dadurch erfolgen, dass die Sicherheitsvorrichtung mindestens ein Federelement zur Vorspannung des mindestens einen verschiebbar geführten Stiftelementes in die Eingriffsposition umfasst, wobei das mindestens eine Stiftelement bei Montage/Demontage gegen die Vorspannkraft des Federelementes in die Ruheposition verschiebbar ist. Damit ist es vorteilhaft möglich, dass eine Montage einfach erfolgen kann, wobei außerdem durch ein einfaches Verschieben des Stiftelementes gegen die Vorspannkraft des Federelementes, z.B. mittels eines geeigneten Werkzeugs, eine leichte Demontage gewährleistet werden kann.

Für Herstellung einer Unverlierbarkeit des Stiftelementes weist die Sicherheitsvorrichtung vorteilhaft mindestens ein Sicherungselement auf, welches eine Begrenzung eines Hubs des mindestens einen Stiftelementes bildet.

Wenn das mindestens eine Sicherungselement die Funktion des mindestens einen Federelementes zur Vorspannung des mindestens einen verschiebbar geführten Stiftelementes aufweist, ergibt dies eine Reduktion von Bauteilen.

Hierzu kann das mindestens eine Sicherungselement als eine elastische Klammer, z.B. aus Blech, ausgebildet sein, welche mit einem Abschnitt mit dem mindestens einen Stiftelement verbunden ist und mit einem anderen Abschnitt an einem ortsfesten Abschnitt, in oder an welchem das mindestens eine verschiebbare Stiftelement verschiebbar geführt ist, verbunden ist oder in Kontakt steht.

Es ist vorgesehen, dass das mindestens eine Sicherungselement mindestens einen Abschnitt, welcher mit dem mindestens einen Stiftelement verbunden ist, und mindestens einen weiteren Abschnitt, welcher mit einem ortsfesten Abschnitt, in oder an dem das mindestens eine verschiebbare Stiftelement verschiebbar geführt ist, verbunden ist oder in Kontakt steht, aufweist. So ist eine einfache Montage des Sicherungselementes möglich.

In einer Ausführung ist das mindestens eine verschiebbare Stiftelement in mindestens einer Führungsaufnahme der Belagrückenplatte des rückenseitigen Bremsbelags verschiebbar geführt, und der mindestens eine Abschnitt des mindestens einen Sicherungselementes, welcher mit dem mindestens einen Stiftelement verbunden ist, ist mit dem mindestens einen weiteren Abschnitt des mindestens einen Sicherungselementes in einer Verbindung unlösbar verbunden, wobei die so verbundenen Abschnitte einen Abschnitt der Belagrückenplatte umgreifen und sich durch eine Öffnung der Belagrückenplatte hindurch erstrecken. Das auf diese Weise einfach montierte Sicherungselement wird nach seiner Montage dann z.B. durch Verschweißen, seiner Abschnitte unlösbar an der Belagrückenplatte angebracht, wobei es aber die Hubbewegung des Stiftelementes zulässt.

In einer alternativen Ausführung ist das mindestens eine verschiebbare Stiftelement in mindestens einer Führungsaufnahme der rückenseitigen Belagrückenplatte des rückenseitigen Bremsbelags verschiebbar geführt, und der mindestens eine Abschnitt des mindestens einen Sicherungselementes, welcher mit dem mindestens einen Stiftelement verbunden ist, ist mit dem mindestens einen weiteren Abschnitt des mindestens einen Sicherungselementes durch einen weiteren Abschnitt des mindestens einen Sicherungselementes in einer Verbindung unlösbar verbunden, wobei das mindestens eine Sicherungselement in einer Öffnung der rückenseitigen Belagrückenplatte angeordnet ist.

In einer anderen alternativen Ausführung ist das mindestens eine verschiebbare Stiftelement in mindestens einer Führungsaufnahme der rückenseitigen Belagrückenplatte des rückenseitigen Bremsbelags verschiebbar geführt, und der mindestens eine Abschnitt des mindestens einen Sicherungselementes ist mit dem mindestens einen Stiftelement verbunden, und der mindestens eine weitere Abschnitt ist an der rückenseitigen Belagrückenplatte des rückenseitigen Bremsbelags fest angebracht. Das Sicherungselement kann z.B. auch ein kostengünstiger Wellensicherungsring sein, der mit dem mindestens einen verschiebbar geführten Stiftelement verbunden ist.

In einer anderen Ausführung kann das mindestens eine Sicherungselement durch eine Materialumformung, z.B. Stauchen, Vertaumeln, Nieten oder dergleichen, des mindestens einen Stiftelementes geformt sein. Damit lässt sich ein raumsparender Aufbau erreichen.

Das mindestens eine verschiebbar geführte Stiftelement kann auch in einer Aufnahme des Belagbügels verschiebbar geführt und am Belaghaltebügel gehalten sein, wobei ein Kopf des mindestens einen verschiebbar geführten Stiftelementes als das mindestens eine Sicherungselement geformt ist, und wobei ein Fußabschnitt des mindestens einen verschiebbar geführten Stiftelementes mit einer Führungsaufnahme der rückenseitigen Belagrückenplatte des rückenseitigen Bremsbelags in der Eingriffsposition in Eingriff steht. Auch hier wird der rückenseitige Bremsbelag verwendet.

Ein Bremsbelagsatz für eine oben beschriebene Scheibenbremse geht aus Ansprüchen 15 und 16 hervor. Dies ergibt einen vorteilhaft leicht zu montierenden Bremsbelagsatz, der gleichzeitig eine einfache Sicherung der Position des Belaghaltebügels gewährleistet.

Ausführungsbeispiele eines erfindungsgemäßen Bremsbelags und einer erfindungsgemäßen Scheibenbremse sind in den Zeichnungen dargestellt und werden im Folgenden näher beschrieben, wobei auch weitere Vorteile erfindungsgemäßer Ausführungen erläutert werden. Es zeigen:
- Fig. 1: eine schematische Perspektivansicht einer erfindungsgemäßen Scheibenbremse;
- Fig. 2: ein beispielhafter erfindungsgemäßer Bremsbelag mit einem ersten Ausführungsbeispiel einer Sicherheitsvorrichtung;
- Fig. 3: eine schematische Schnittansicht in einer y-z-Ebene des ersten Ausführungsbeispiels der Sicherungsvorrichtung nach Fig. 2;
- Fig. 4-4a: schematische Perspektivansichten eines zweiten Ausführungsbeispiels der Sicherungsvorrichtung;
- Fig. 5-5a: schematische Perspektivansichten einer Variante des zweiten Ausführungsbeispiels der Sicherungsvorrichtung nach Fig. 4-4a;
- Fig. 6-6a: schematische Perspektivansichten eines dritten Ausführungsbeispiels der Sicherungsvorrichtung;
- Fig. 7-7d: verschiedene Formen eines Belaghaltebügels;
- Fig. 8-10: verschiedene Ausführungsbeispiele von Axialsicherungen von Belaghaltebügeln;
- Fig. 11-15: verschiedene Ausführungsbeispiele von Vertikalsicherungen von Belaghaltebügeln;
- Fig. 16-19: verschiedene Ausführungsbeispiele von Sicherungselementen; und
- Fig. 20-23: verschiedene Ausführungsbeispiele von zusätzlichen Sicherungen.

Nachfolgend werden Begriffe wie "oben", "unten", "rechts", "links" usw. verwendet, welche sich auf Ausrichtungen in den Figuren beziehen. Koordinaten x, y, z in den Figuren dienen der weiteren Orientierung.

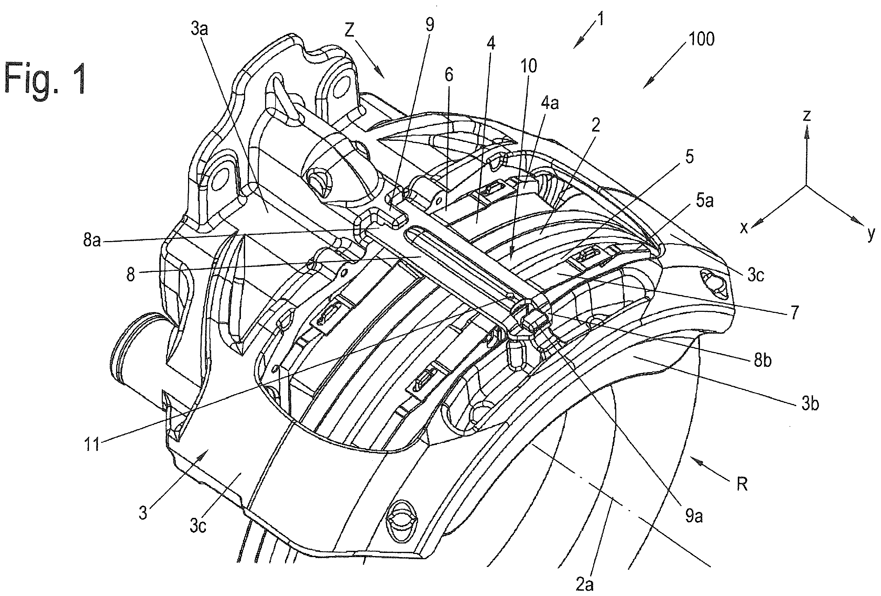

Fig. 1 zeigt eine schematische Perspektivansicht einer erfindungsgemäßen Scheibenbremse 1, beispielsweise eine pneumatische Scheibenbremse 1.

Die Scheibenbremse 1 ist z.B. einem Fahrzeug, insbesondere Nutzfahrzeug, zugeordnet und umfasst eine Bremsscheibe 2 mit einer hier in y-Richtung verlaufenden Bremsscheibendrehachse 2a, einen Bremssattel 3, einen nicht näher bezeichneten Bremsträger und zumindest zwei Bremsbeläge 4 und 5, die jeweils auf einer Belagrückenplatte 4a, 5a aufgebracht sind. Die Bremsbeläge 4 und 5 sind in dem Bremsträger in so genannten Belagschächten aufgenommen und durch einen Belaghaltebügel 8 gehalten, der unten noch beschrieben wird.

Der Bremssattel 3 ist hier als Schiebesattel ausgebildet, an dem ortsfest fixierten Bremsträger in nicht näher beschriebener Weise gehalten und weist einen Zuspannabschnitt 3a und einen Rückenabschnitt 3b auf, welche in y-Richtung an beiden Enden über Verbindungsabschnitte 3c in y-Richtung miteinander verbunden sind. Dabei sind der Zuspannabschnitt 3a und der Rückenabschnitt 3b jeweils auf einer Seite der Bremsscheibe 2 parallel zu dieser angeordnet, wobei sich die Verbindungsabschnitte 3c in y-Richtung parallel zur Bremsscheibendrehachse 2a erstrecken. Der Zuspannabschnitt 3a und der Rückenabschnitt 3b bilden zusammen mit den Verbindungsabschnitten 3c eine Öffnung über der Bremsscheibe 2 mit den Bremsbelägen 4 und 5 zum Zugriff auf die Bremsbelägen 4 und 5 bei Montage, Wechsel und Wartungsarbeiten.

Der Zuspannabschnitt 3a des Bremssattels 3 nimmt eine Zuspannmechanik der Scheibenbremse 1 auf. Die Zuspannmechanik dient zur Betätigung der Scheibenbremse 1 und kann z.B. ein Bremsdrehhebel mit einem Druckluftzylinder sein, worauf hier aber nicht weiter eingegangen wird.

Die Seite der Scheibenbremse 1, auf welcher der Zuspannabschnitt 3a des Bremssattels 3 mit der Zuspannmechanik angeordnet ist, wird im Weiteren als Zuspannseite Z bezeichnet. Die andere Seite der Scheibenbremse 1, auf welcher der Rückenabschnitt 3b des Bremssattels 3 angeordnet ist, wird als Rückenseite R, die auch Reaktionsseite genannt wird, im Folgenden bezeichnet. Diese Begriffe "Zuspannseite" und "Rückenseite" und weitere sich darauf beziehende Bezeichnungen sind üblich und dienen zu einer besseren Orientierung.

So wird der Bremsbelag 4 mit der Belagrückenplatte 4a, der sich auf der Zuspannseite Z befindet, als zuspannseitiger Bremsbelag 4 bezeichnet, und der diesem gegenüberliegende wird rückenseitiger Bremsbelag 5 mit der Belagrückenplatte 5a genannt.

Der zuspannseitige Bremsbelag 4 wird von der Zuspannmechanik bei Bremsvorgängen mit einer Zuspannkraft in y-Richtung beaufschlagt. Der rückenseitige Bremsbelag 5 ist im Rückenabschnitt 3b des Bremssattels 3 aufgenommen und weist bei dieser Scheibenbremse 1 mit dem Bremssattel 3 in Schiebesattelausführung keine Relativbewegungen zum Rückenabschnitt 3b auf.

Die Bremsbeläge 4 und 5 sind an den Oberseiten der Belagrückenplatten 4a, 5a jeweils mit einer Belaghaltefeder 6, 7 versehen, welche mit dem Belaghaltebügel 8 zusammenwirken. Der Belaghaltebügel 8 erstreckt sich in y-Richtung über der Öffnung, die von dem Zuspannabschnitt 3a, dem Rückenabschnitt 3b und dem Verbindungsabschnitten 3c über der Bremsscheibe 2 gebildet ist, und ist über den eingebauten Bremsbelägen 4, 5 derart angeordnet, dass er auf die Oberseiten der Belaghaltefedern 6, 7 drückt und so zur Sicherung der Bremsbeläge 4, 5 im Bremsträger dient. Dabei ist der Belaghaltebügel 8 mit einem zuspannseitigen Endabschnitt 8a in einem Lagerabschnitt 9 des Zuspannabschnitts 3a des Bremssattels 3 aufgenommen, wobei ein gegenüberliegender Endabschnitt 8b des Belaghaltebügels 8 mit einem Halteabschnitt 9a des Rückenabschnitts 3b des Bremssattels 3 verbunden ist.

Der Belaghaltebügel 8 ist mit dem Lagerabschnitt 9 und dem Halteabschnitt 9a verbunden und mit einer Sicherungsvorrichtung 10 derart versehen, dass er, z.B. durch auftretende Querkräfte, einerseits in seiner eingebauten Position nicht verschoben werden, und andererseits montiert und demontiert werden kann. Die Sicherheitsvorrichtung 10 ist hier im Bereich des rückenseitigen Bremsbelags 5 angeordnet und wird unten noch weiter beschrieben. In einer Ausführung weist die Sicherungsvorrichtung 10 ein Stiftelement 11 auf, welches in Fig. 1 im Bereich des rückenseitigen Endabschnitts 8b des Belaghaltebügels 8 angedeutet ist.

Mit dem Bezugszeichen 100 ist ein Bremsbelagsatz bezeichnet, welcher die beiden Bremsbeläge 4, 5 auf der jeweiligen Belagrückenplatte 4a, 5a, die zugehörigen Belaghaltefedern 6, 7, den Belaghaltebügel 8 und die Sicherungsvorrichtung 10 umfasst.

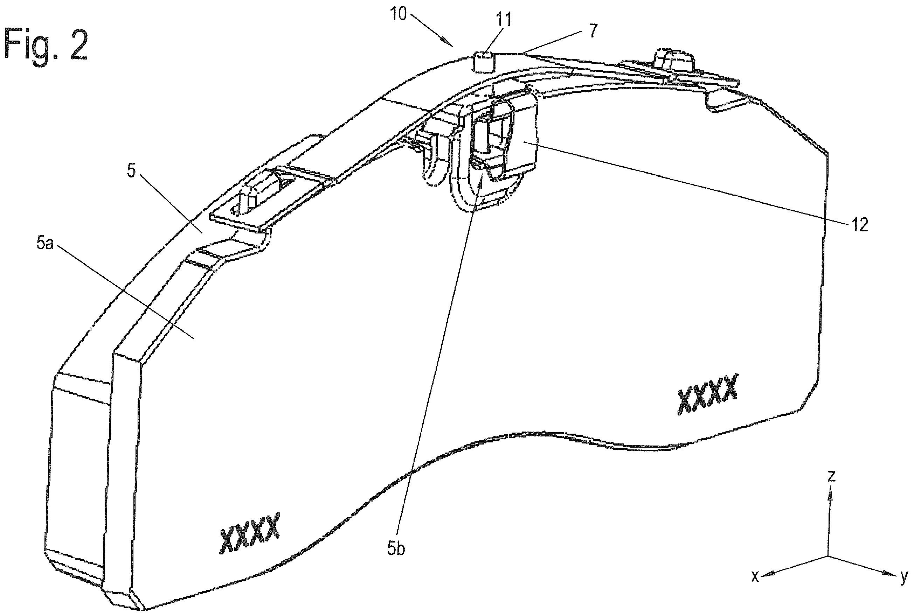

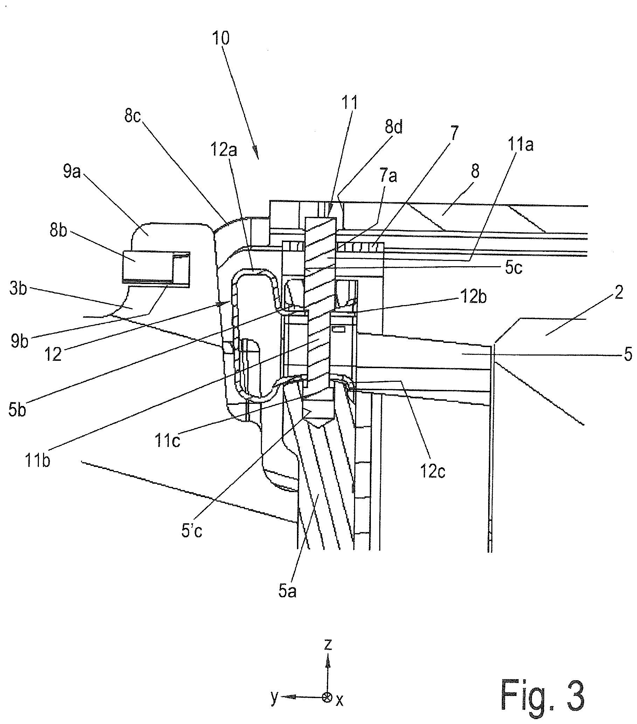

In Fig. 2 ist ein beispielhafter erfindungsgemäßer Bremsbelag 5, 5a des Bremsbelagsatzes 100 mit einem ersten Ausführungsbeispiel der Sicherungsvorrichtung 10 dargestellt. Fig. 3 stellt eine schematische Schnittansicht in einer y-z-Ebene des ersten Ausführungsbeispiels der Sicherungsvorrichtung 10 nach Fig. 2 dar.

Die Sicherungsvorrichtung 10 umfasst in dieser beispielhaften Ausführung das Stiftelement 11 und ein Sicherungselement 12. Das Stiftelement 11 ist hier ein Bolzen, welcher sich in z-Richtung aus einer Führungsaufnahme 5'c in der Belagrückenplatte 5a durch eine Öffnung 5b der Belagrückenplatte 5a durch eine weitere Führungsauf nahme 5c der Belagrückenplatte 5a aus dieser heraus nach oben und durch eine Durchgangsöffnung 7a in der zugehörigen Belaghaltefeder 7 weiter in z-Richtung in eine Aufnahme 8d des darüber angeordneten Belaghaltebügels 8 hinein erstreckt. Die Führungsaufnahmen 5'c und 5c der Belagrückenplatte 5a sowie die Aufnahme 8d des Belaghaltebügels 8 korrespondieren mit der Form bzw. dem Querschnitt des Stiftelementes 11. So kann das Stiftelement 11 auch einen Querschnitt aufweisen, der von einem kreisrunden Querschnitt verschieden ist, z.B. oval, eckig o.dgl.

Das Sicherungselement 12 dient einerseits zur sicheren Halterung des Stiftelementes 11 in der Belagrückenplatte 5a und zur elastischen Vorspannung des Stiftelementes 11 in positiver z-Richtung in Richtung auf den Belaghaltebügel 8 in eine Eingriffsposition. Auf diese Weise kann das Stiftelement 11 in der Belagrückenplatte 5a bei Montage des Belaghaltebügels 8 gegen die Federkraft des Sicherungselementes 12 in eine Ruheposition eingedrückt werden, wobei bei montiertem Belaghaltebügel 8 das vorgespannte Sicherungselement 12 das obere Ende des Kopfabschnitts 11a des Stiftelementes 11 in die Eingriffsposition des Stiftelementes 11 in die Aufnahme 8d des Belaghaltebügels 8 hineindrückt. Die Aufnahme 8d des Belaghaltebügels 8 kann auch eine besondere Kontur aufweisen, welche z.B. als Tasche oder Bohrung ausgeführt ist.

Mit anderen Worten, das Stiftelement 11 ist aus einer Ruheposition in eine Eingriffsposition und zurück verschiebbar. Das Stiftelement 11 wird durch die Vorspannfunktion des Sicherungselementes 12 (oder/und eines Federelementes 13, das unten noch erläutert wird) in die Eingriffsposition vorgespannt und kann, z.B. bei Montage/Demontage gegen die Vorspannkraft in die Ruheposition verschoben werden.

Das Sicherungselement 12 ist hier als eine federnde Klammer ausgebildet und weist einen Körper 12a und zwei Abschnitte 12b, 12c auf, die mit dem Körper 12a verbunden sind. Der Körper 12a ist jeweils über einen bogenförmigen Übergang mit einem Abschnitt 12b, 12c verbunden. Die Abschnitte 12b und 12c des Sicherungselementes 12 wirken in der Öffnung 5b der Belagrückenplatte 5a mit diesem und dem Stiftelement 11 zusammen.

Das Stiftelement 11 weist einen Kopfabschnitt 11a, einen Körper 11b und einen Fußabschnitt 11c auf. Der Kopfabschnitt 11a ist in der oberen Führungsaufnahme 5c der Belagrückenplatte 5a verschiebbar geführt und erstreckt sich durch die Belaghaltefeder 7 in die Aufnahme 8d des Belaghaltebügels 8. Der Körper 11b des Stiftelementes 11 erstreckt sich durch die Öffnung 5b der Belagrückenplatte 5a. Die Öffnung 5b ist hier eine Durchgangsöffnung in y-Richtung der Belagrückenplatte 5a. Der Fußabschnitt 11c ist in der unteren Führungsaufnahme 5'c der Belagrückenplatte 5a verschiebbar geführt.

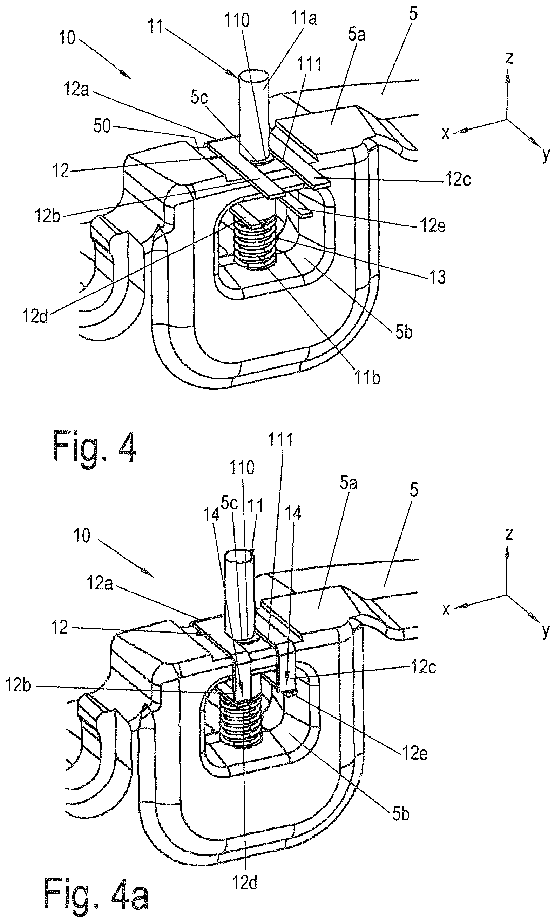

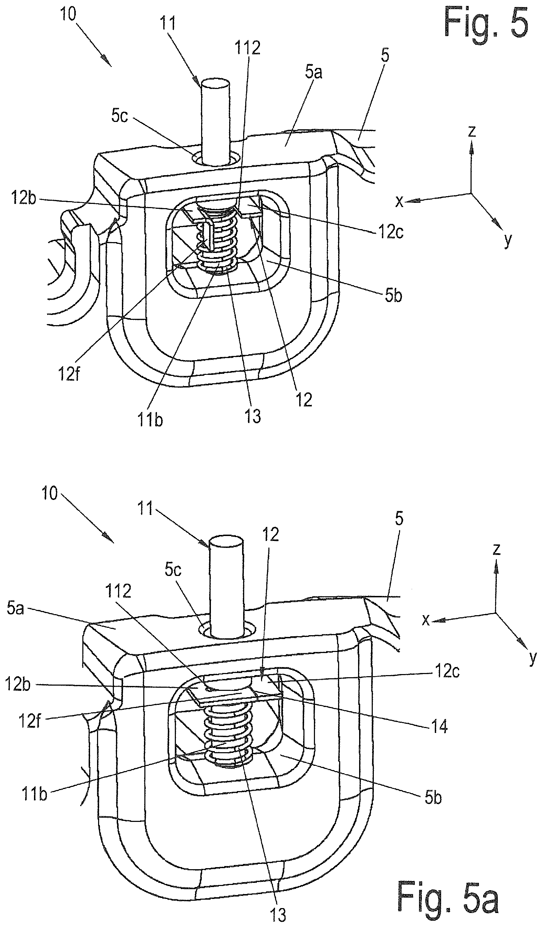

Der Körper 11b weist einen kleineren Querschnitt als derjenige des Kopfabschnitts 11a und derjenige des Fußabschnitts 11c auf. Dadurch ist jeweils im Übergang vom Körper 11b zum Kopfabschnitt 11a und Fußabschnitt 11c eine Schulter gebildet. Die obere Schulter zwischen dem Kopfabschnitt 11a und der Körper 11b steht in Kontakt mit dem oberen Abschnitt 12b des Sicherungselementes 12, wobei sich der untere Abschnitt 12c des Sicherungselementes 12 in der Öffnung 5b an der Belagrückenplatte 5a abstützt. Auf diese Weise übt das Sicherungselement 12 eine Vorspannung in positiver z-Richtung auf das Stiftelement 11 relativ zu der Belagrückenplatte 5a aus. Gleichzeitig dient das Sicherungselement 12 als Verliersicherung für das Stiftelement 11, da dieses von dem Sicherungselement 12 gehalten ist. Dies erfolgt dadurch, dass die Abschnitte 12b und 12c in y-Richtung Aufnahmeschlitze aufweisen, um den Körper 11b des Stiftelementes 11 zu umgreifen, wenn das Sicherungselement 11 in negativer y-Richtung in die Öffnung 5b der Belagrückenplatte 5a eingeschoben wird. Derartige Aufnahmeschlitze sind z.B. in den Figuren 4, 4a, 5, 5a gezeigt.

In Fig. 3 ist außerdem zu erkennen, dass der rückenseitige Endabschnitt 8b des Belaghaltebügels 8 in einer sich in y-Richtung erstreckenden Aufnahme 9b des Halteabschnitts 9a des Rückenabschnitts 3b des Bremssattels 3 eingesetzt ist.

Die Figuren 4-4a zeigen schematische Perspektivansichten eines zweiten Ausführungsbeispiels der Sicherungsvorrichtung 10.

In diesem zweiten Ausführungsbeispiel umfasst die Sicherungsvorrichtung 10 das Stiftelement 11, ein Sicherungselement 12 und ein Federelement 13.

Das Sicherungselement 12 weist hier nur die Sicherungsfunktion als Verliersicherung des Stiftelementes 11 auf. Die Funktion der Vorspannung des Stiftelementes 11 in z-Richtung wird von dem Federelement 13 gebildet, welches hier eine Druckfeder ist, die um den Körper 11b des Stiftelementes 11 in der Öffnung 5b der Belagrückenplatte 5a herum angeordnet ist. Das Federelement 13 stützt sich mit seinem unteren Ende an der Belagrückenplatte 5a in der Öffnung 5b und mit seinem oberen Ende an der oben beschriebenen Schulter im Übergang von Körper 11b und Kopfabschnitt 11a ab. Das Federelement 13 kann auch aus mehreren Federn gebildet sein. Auch Tellerfedern, z.B. als Tellerfederpaket, sind denkbar.

Das Sicherungselement 12 kann z.B. in Form einer Blechhaube oder Scheibe ausgebildet sein. In der gezeigten Ausführung umfasst es einen Körper 12a und vier Abschnitte 12b, 12c, 12d und 12e. Der Körper 12a weist einen plattenförmigen Abschnitt auf (hier in der x-z-Ebene), welcher an seiner Oberkante und Unterkante jeweils einen um 90° in eine x-y-Ebene umgebogenen Abschnitt mit den fingerartigen Abschnitten 12b und 12c (oben) und 12d und 12e (unten) besitzt. Diese umgebogenen Abschnitte sind jeweils mit einer sich in y-Richtung erstreckenden, U-förmigen Aufnahme 111 versehen, welche seitlich jeweils von den fingerartigen Abschnitten 12b und 12c (oben) und 12d und 12e (unten) begrenzt ist.

Fig. 4 zeigt das Sicherungselement 12 im Lieferzustand beim Einbau. Die obere U-förmige Aufnahme 111 mit den fingerartigen Abschnitten 12b und 12c umgibt den unteren Teil des Kopfabschnitts 11a des Stiftelementes 11, wobei die fingerartigen Abschnitte 12b und 12c auf einem Kragen 110 des Stiftelementes 11 axial aufliegen. Anstelle eines Kragens 110 kann auch eine Nut vorgesehen sein, in welche die Kanten der U-förmigen Aufnahme 111 eingreifen. In diesem Bereich ist die Oberseite der Belagrückenplatte 5a mit einer nach unten eingeformten Ausnehmung 50 versehen, in welcher die fingerartigen Abschnitte 12b und 12c angeordnet sind und in y-Richtung über den Rand der Ausnehmung 50 hervorstehen.

Die unteren fingerartigen Abschnitte 12d und 12e erstrecken sich durch die Öffnung 5b in y-Richtung und stehen unterhalb der oberen fingerartigen Abschnitte 12b und 12c hervor, jedoch um ein kürzeres Maß als diese.

In Fig. 4a ist der Zustand nach vollendetem Einbau des Sicherungselementes 12 gezeigt, wobei das Sicherungselement 12 durch Umformung (elastisch oder/und plastisch) bearbeitet ist. Die hervorstehenden Enden der oberen fingerartigen Abschnitte 12b und 12c sind um 90° nach unten um den Rand der Ausnehmung 50 gebogen und kontaktieren mit ihren Enden die Enden der unteren fingerartigen Abschnitte 12d und 12e. Die Enden der Abschnitte 12b und 12d sowie die Enden der Abschnitte 12c und 12e sind jeweils miteinander durch ein geeignetes, d.h. unlösbares, Fügeverfahren in einer Verbindung 14 verbunden. Hierzu kann z.B. Schweißen, Nieten, Crimpen, Clinchen o.dgl. benutzt werden.

Da das Sicherungselement 12 einerseits mit dem Stiftelement 11 axial fest verbunden ist und sich die Abschnitte 12d und 12e innerhalb der Öffnung 5b der Belagrückenplatte 5a befinden, ist das Stiftelement 11 nur bis zu einem Anschlag der Abschnitte 12d und 12e an der oberen Wand der Öffnung 5b der Belagrückenplatte 5a verschiebbar und ist auf diese Weise in seinen Führungsaufnahmen 5c, 5'c unverlierbar gehalten. Da die Abschnitte 12b und 12d, sowie 12c und 12e fest untereinander verbunden sind, und durch die Öffnung 5b hindurch um den oberen stegförmigen Teil im Bereich der Öffnung 5b der Belagrückenplatte 5a herum angeordnet sind, ist auch das Sicherungselement 12 unverlierbar gehalten. Damit ist eine sichere Halterung der Bremsbeläge 4, 5 über den auf diese Weise in seiner Position durch das Stiftelement 11 der Sicherungsvorrichtung 10 gesicherten Belaghaltebügel 8 gewährleistet. Der Belaghaltebügel 8 ist durch den Eingriff von Stiftelement 11 in der Aufnahme 8d gegen Lösen aus seiner Halteposition gesichert.

Anstelle dieses Sicherungselementes 12 in Klammerform ist auch eine demontierbare Version, z.B. ein Sprengring, Sicherungsring o.ä. denkbar.

Fig. 5 und 5a zeigen schematische Perspektivansichten einer Variante des zweiten Ausführungsbeispiels der Sicherungsvorrichtung 10 nach Fig. 4-4a.

Das Sicherungselement 12 bildet auch hier nur die Sicherungsfunktion, wobei das Federelement 13 die Vorspannfunktion wie bei Fig. 4-4a beschrieben bildet. Das Sicherungselement 12 ist hier plattenförmig mit fingerartigen Abschnitten 12b und 12c in einer x-y-Ebene innerhalb der Öffnung 5b der Belagrückenplatte 5a angeordnet und umgreift den Körper 11b des Stiftelementes 11, wobei die Kanten der fingerartigen Abschnitte 12b und 12c zwischen sich eine kreisförmige Aufnahme 112 bilden, die mit der Schulter zwischen Körper 11b und Kopfabschnitt 11a zusammenwirkt.

In dieser Variante ist an dem Ende des linken fingerartigen Abschnitts 12b ein nach unten gebogener Abschnitt 12f angebracht. Nach Einbau des Sicherungselementes 12 wird dieser Abschnitt 12f nach oben um die y-Achse in die x-y-Ebene des Sicherungselementes 12 gebogen und mit seinem freien Ende mit dem Ende des rechten fingerartigen Abschnitts 12c in einer Verbindung 14 fest verbunden. Es können die gleichen Fügeverfahren wie bei der Ausführung nach Fig. 4-4a verwendet werden. Dieses mit dem Stiftelement 14 auf diese Weise axial unlösbar verbundene Sicherungselement 11 ist in der Öffnung 5b der Belagrückenplatte 5a nur bis zum oben beschriebenen oberen Anschlag an der oberen Wand der Öffnung 5b zusammen mit dem Stiftelement 11 verschiebbar. Das Stiftelement 11 ist somit unverlierbar gehalten. Das Sicherungselement 12 ist durch die Verbindung 14 der Abschnitte 12f und 12c ebenfalls unverlierbar angeordnet.

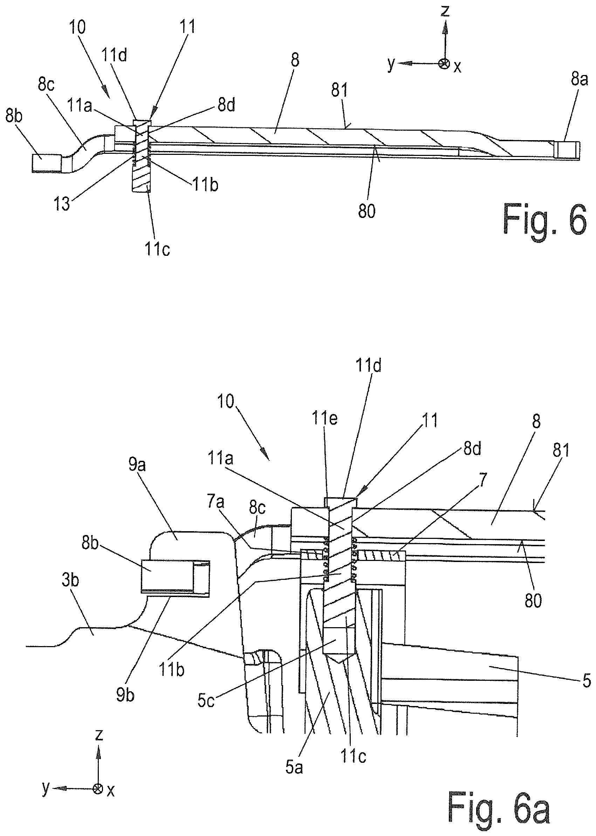

Fig. 6-6a stellen schematische Perspektivansichten eines dritten Ausführungsbeispiels der Sicherungsvorrichtung 10 dar.

Die Sicherungsvorrichtung 10 weist in dem dritten Ausführungsbeispiel das Stiftelement 11 mit einem Federelement 13 als Vorspannfeder verschiebbar im Belaghaltebügel 8 gehalten auf, wobei das Stiftelement 11 mit der Führungsaufnahme 5c in der Belagrückenplatte 5a durch Eingreifen zusammenwirkt.

In dem dritten Ausführungsbeispiel ist das Stiftelement 11 in den Belaghaltebügel 8 integriert und in dem Belaghaltebügel 8 verliersicher gehalten. Fig. 6 zeigt den Belaghaltebügel 8 mit dem Stiftelement 11, welches in der hier als Durchgangsloch ausgebildeten Aufnahme 8d vor dem Endabschnitt 8b des Belaghaltebügels 8 mit seinem Körper 11b in z-Richtung verschiebbar geführt ist.

In Fig. 6a ist eine Schnittdarstellung ähnlich Fig. 3 gezeigt.

Der Kopfabschnitt 11a des Stiftelementes 11 ist an seinem oberen Ende als eine Art Nagelkopf mit einem verbreiterten Kopf 11d versehen und geht ohne Querschnittsunterschied in den Körper 11b über. An den Körper 11d schließt sich der Fußabschnitt 11c mit größerem Querschnitt an, wobei eine Schulter gebildet ist.

Ein Federelement 13 ist zwischen der Schulter am Übergang des Fußabschnitts 11c in den Körper 11b und einer Unterseite 80 des Belaghaltebügels 8 angeordnet. Das Federelement 13 umgibt den Körper 11b des Stiftelementes 11 und übt auf dieses eine Vorspannung in negativer z-Richtung nach unten aus. Der Körper 11b mit dem Federelement 13 erstreckt sich im montierten Zustand des Belaghaltebügels 8 durch eine Durchgangsöffnung 7a in der Belaghaltefeder 7. Der Fußabschnitt 11c ist in der Führungsaufnahme 5c der Belagrückenplatte 5a aufgenommen und in z-Richtung verschiebbar geführt.

Der Kopf 11d wird durch eine Materialumformung, z.B. mittels Vertaumeln, Nieten, Stauchen oder ähnlichen Verfahren, erst dann gebildet, nachdem das Stiftelement 11 mit dem aufgeschobenen Federelement 13 mit dem Kopfabschnitt 11a in die Aufnahme 8d des Belaghaltebügels 8 von der Unterseite 80 her eingesetzt worden ist. Die Unterseite des Kopfes 11d liegt als Kragen 11e auf einer Oberseite 81 des Belaghaltebügels 8 auf, wodurch ein axialer Anschlag in negativer z-Richtung nach unten durch den Belaghaltebügel 8 für das Stiftelement 11 gebildet ist. Auf diese Weise ist das Stiftelement 11 in dem Belagbügel 8 verliersicher gehalten.

Es kann aber auch anstelle des Kopfes 11d ein Sicherungsring o.ä. vorgesehen sein. Eine weitere Variante sieht vor, dass anstelle der gezeigten Ausbildung des Kopfes 11d z.B. mindestens eine radial von dem oberen Ende des Kopfabschnitts 11a hervorstehende Nase (nicht gezeigt) angeformt ist. In diesem Fall weist die Aufnahme 8d eine zu der Nase korrespondierende Längsnut auf, so dass die Nase durch diese Längsnut beim Einsetzen des Stiftelementes 11 von der Unterseite 80 des Belagbügels 8 her hindurch geschoben werden kann. Wenn die Nase dann an der Oberseite des Belagbügels 8 aus der Längsnut der Aufnahme 8d hervorsteht, wird das Stiftelement 11 um seine eigene Längsachse derart verdreht, dass die hervorstehende Nase zur Auflage auf der Oberseite 81 des Belaghaltebügels 8 kommt und somit das Stiftelement 11 axial in negativer z-Richtung verliersicher blockiert. Für die Nase kann in dieser Blockierstellung z.B. eine mit der Nase korrespondierende Einformung auf der Oberseite 80 des Belaghaltebügels 8 vorgesehen sein. Auch auf diese Weise ist das Stiftelement 11 in dem Belagbügel 8 verliersicher gehalten.

Nach Einbau der Bremsbeläge 4, 5 wird der Belaghaltebügel 8 montiert, wobei das Stiftelement 11 automatisch in der Führungsaufnahme 5c der Belagrückenplatte 5a des rückenseitigen Bremsbelags 5 einrastet, nachdem es durch die Durchgangsöffnung 7a der Belaghaltefeder 7 gesteckt worden ist.

Bei der Montage und/oder Demontage des Belaghaltebügels 8 kann das Stiftelement 11 an seinem Kopf 11d oder oberen Ende des Kopfabschnitts 11a in der Aufnahme 8d hochgezogen werden, um einen Ein-/Ausbau zu erleichtern.

Der Belaghaltebügel 8 ist hier so ausgebildet, dass sein zuspannseitiger Endabschnitt 8b nach unten gekröpft ist. Dabei ist es mit dem Körper des Belaghaltebügels 8 durch einen Übergangsabschnitt 8c verbunden, welcher entsprechend der Kröpfung zwei Bogen derart aufweist, dass eine Fläche des zuspannseitigen Endabschnitts 8b im Wesentlichen parallel zu der Oberseite 81 bzw. Unterseite 80 des Belaghaltebügels 8 verläuft und mit der Aufnahme 9b des Halteabschnitts 9a in Eingriff steht.

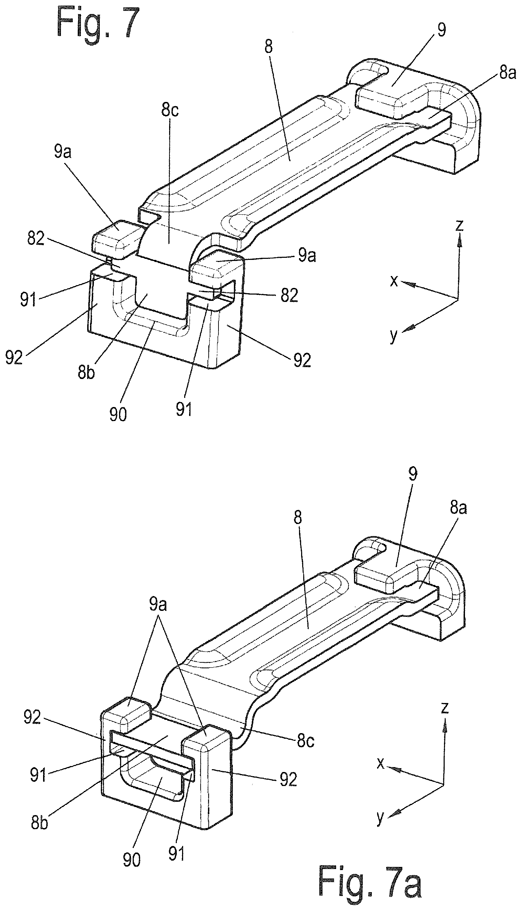

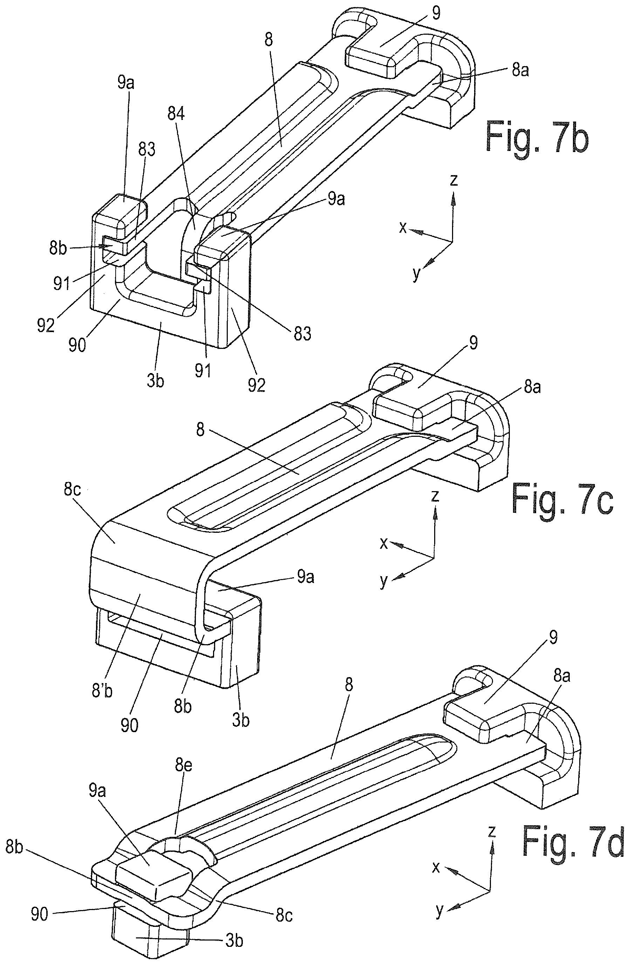

In den Figuren 7-7d sind verschiedene Formen des Belaghaltebügels 8 dargestellt.

Die verschiedenen Formen betreffen in den Figuren 7-7d den zuspannseitigen Endabschnitt 8b des Belaghaltebügels 8.

Fig. 7 zeigt eine erste Variante, bei welcher der zuspannseitige Endabschnitt 8b um 90° nach unten in negativer z-Richtung gebogen ist. Der Übergangsabschnitt 8c weist dementsprechend nur einen Bogen auf. Auf beiden Seiten des zuspannseitigen Endabschnitts 8b, der in einer x-z-Ebene liegt, ist jeweils ein rechtförmiger Vorsprung 82 angeordnet. Diese Vorsprünge 82 werden z.B. durch Ausstanzen der Ecken an dem zuspannseitigen Endabschnitt 8b und von seitlichen Zwischenabschnitten zwischen den Vorsprüngen und dem Körper des Belaghaltebügels 8 im Bereich der Übergangsabschnitte 8c gebildet, wenn der Belaghaltebügel 8 als Stanzbiegeteil hergestellt wird. Der umgebogene Endabschnitt 8b greift in eine mit ihm korrespondierende Ausnehmung 90 des Halteabschnitts 9a des Rückenabschnitts 3b des Bremssattels 3 ein. Die Vorsprünge 82 sind beiderseits des zuspannseitigen Endabschnitts 8b in mit ihnen korrespondierenden Aufnahmen 91 in Seitenpfosten 92 des Halteabschnitt 9a aufgenommen.

Der Endabschnitt 8b ist zusammen mit den Vorsprüngen 82 formschlüssig in dem Halteabschnitt 9a aufgenommen.

In Fig. 7a ist der Endabschnitt 8b nach unten gekröpft und über den gebogenen Übergangsabschnitt 8c mit dem Belaghaltebügel 8 verbunden. Der Endabschnitt 8b ist an seinen beiden seitlichen Endbereichen beidseitig in seitlichen, sich in y-Richtung erstreckenden Aufnahmen 91 von Seitenpfosten 92, welche durch die Ausnehmung 90 beabstandet sind, aufgenommen.

Fig. 7b zeigt den Endabschnitt 8b des Belaghaltebügels 8 in einer Art Gabelform mit zwei seitlichen Zinken 83 und einer mittleren Zinke 84. Die seitlichen Zinken 83 verlaufen gerade in der gleichen Ebene des Körpers des Belaghaltebügels 8 und sind wie in der Variante nach Fig. 7a in seitlichen, sich in y-Richtung erstreckenden Aufnahmen 91 von Seitenpfosten 92 aufgenommen. Die mittlere Zinke 84 ist um ca. 90° nach unten gebogen.

Die Variante nach Fig. 7c stellt den Endabschnitt 8b in einer um ca. 180° unter den Körper des Belaghaltebügels 8 umgebogenen Gestaltung dar. Der Endabschnitt 8b ist in y-Richtung zur Zuspannseite Z hin gerichtet und über zwei Übergangsabschnitte 8c in der jeweiligen Form eines 90°-Bogens mit dem Körper des Belaghaltebügels 8 verbunden. Die zwei Übergangsabschnitte 8c sind über einen Zwischenabschnitt 8'b, der in einer x-z-Ebene liegt, verbunden. Der Endabschnitt 8b ist in einer mit ihm korrespondierenden rechteckigen Ausnehmung 90 in dem Halteabschnitt 9a aufgenommen.

Fig. 7d zeigt eine Ausführung des Belaghaltebügels 8, bei welcher der Endabschnitt 8b nach unten gekröpft ist und eine zentrale Öffnung 8e aufweist, die sich durch den Übergangsabschnitt 8c bis in den Körper des Belaghaltebügels 8 erstreckt. Der Endabschnitt 8b umgreift den Halteabschnitt 9a, der in z-Richtung durch die Öffnung 8e nach oben hervorsteht, und ist in einer mit ihm korrespondierenden rechteckigen Ausnehmung 90 in dem Halteabschnitt 9a aufgenommen.

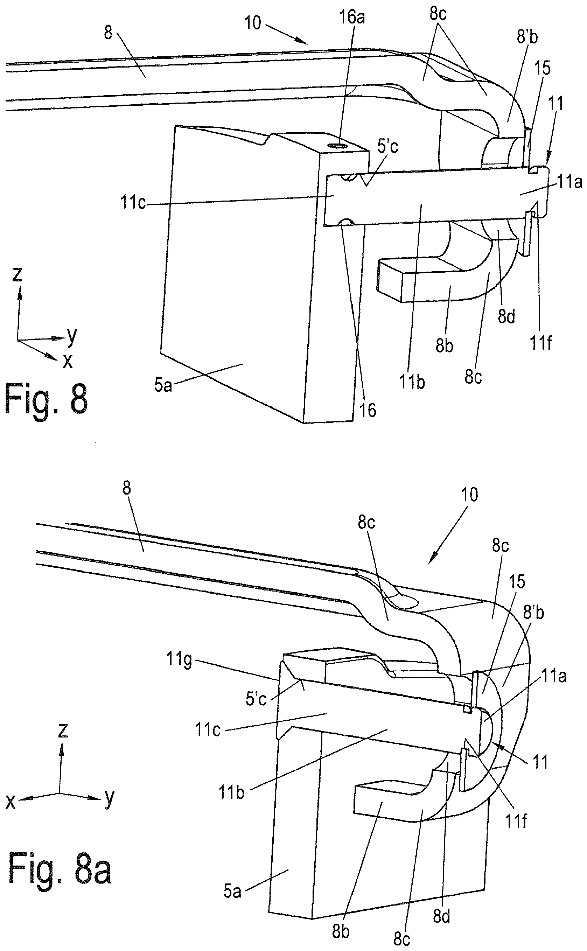

Figuren 8-10 zeigen verschiedene Ausführungsbeispiele von Axialsicherungen von Belaghaltebügeln 8. Unter dem Begriff Axialsicherung ist zu verstehen, dass das Stiftelement 11 parallel bzw. im Wesentlichen parallel zu der Bremsscheibendrehachse 2a angeordnet ist.

Der Endabschnitt 8b des Belaghaltebügels 8 ist im Wesentlichen wie die Variante nach Fig. 7c ausgebildet, wobei der Endabschnitt 8b unter den Belaghaltebügel 8 gebogen ist.

Die Sicherungsvorrichtung 10 des Ausführungsbeispiels nach Fig. 8 weist das Stiftelement 11 und ein Sicherungselement 15 auf. Das Stiftelement 11 ist mit seinem Fußabschnitt 11c in der Belagrückenplatte 5a in einer Führungsaufnahme 5'c über einen Sicherungsabschnitt 16 befestigt. In dem gezeigten Beispiel ist der Sicherungsabschnitt 16 eine umlaufende Nut, in welche ein Sicherungsbolzen 16a, der in z-Richtung in die Belagrückenplatte 5a eingesetzt ist, eingreift. Damit erfolgt eine axiale Sicherung des Stiftelementes 11 in der Belagrückenplatte 5a. Der Sicherungsabschnitt 16 kann in einer Variante als Gewinde, Einpresskerben o.ä. ausgebildet sein. Dies kann auch zusätzlich zu dem Sicherungsbolzen 16a vorgesehen sein. Das Stiftelement 11 ist dabei in y-Richtung, d.h. in Längsrichtung des Belaghaltebügels 8 parallel zu dessen Längsachse und parallel zu der Bremsscheibendrehachse 2a (siehe Fig. 1) angeordnet. Der Kopfabschnitt 11a des Stiftelementes 11 weist eine umlaufende Nut 11f auf und erstreckt sich in y-Richtung durch die Aufnahme 8d des Haltebügels 8, wobei die Aufnahme 8d in dem Zwischenabschnitt 8'b zwischen den Übergangsabschnitten 8c angeordnet ist (siehe Fig. 7c). Nach Montage des Belaghaltebügels 8 in negativer y-Richtung steht der Kopfabschnitt 11a des Stiftelementes 11 durch die Aufnahme 8d hervor und wird mit dem Sicherungselement 15, z.B. ein Wellensicherungsring, versehen, der in der Nut 11f axial festgelegt wird. Damit ist eine Axialsicherung des Belaghaltebügels 8 in y-Richtung gebildet.

Fig. 8a zeigt eine Variante der Befestigung des Fußabschnitts 11c des Stiftelementes 11 in der Belagrückenplatte 5a. Die Führungsaufnahme 5'c erstreckt sich durch die Belagrückenplatte 5a in y-Richtung hindurch. Der Fußabschnitt 11c des Stiftelementes 11 ist in der Gestalt eines Kegelkopfes ausgebildet und mit der Belagrückenplatte 5a z.B. durch Vertaumeln, Verschweißen oder Nieten o.ä. fest verbunden. Die Axialsicherung mit dem Sicherungselement 15 ist gemäß Fig. 8 ausgebildet.

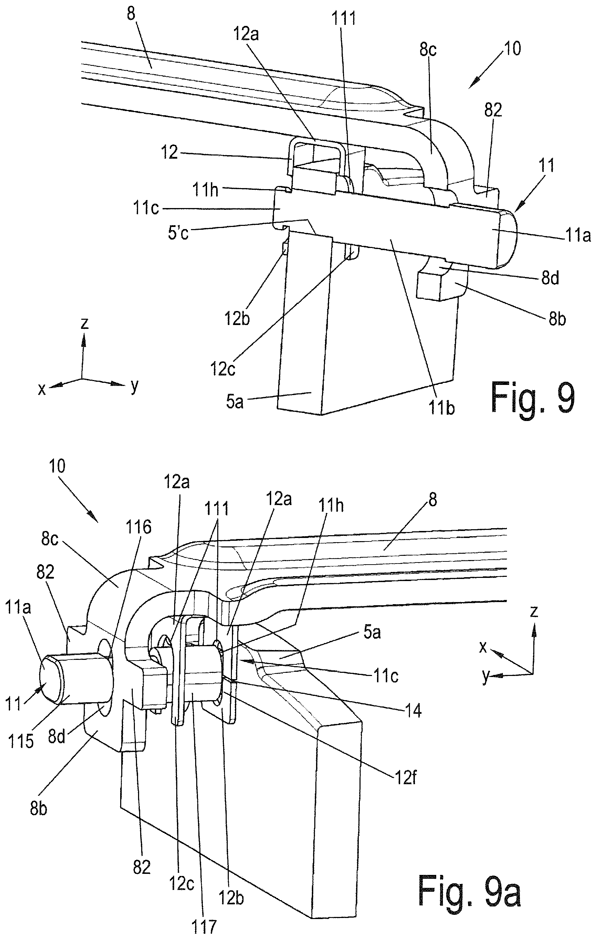

Eine weitere Variante der Sicherungsvorrichtung 10 nach Fig. 8-8a ist in Fig. 9 und 9a in Ansichten von verschiedenen Seiten dargestellt. In Fig. 9 ist die Befestigung des Stiftelementes 11 mit seinem Fußabschnitt 11c in der Führungsaufnahme 5'c der Belagrückenplatte 5a mittels eines Sicherungselementes 12 in Form einer Klammer ausgeführt. Das Sicherungselement 12 ist U-förmig mit einem Körper 12a und zwei Abschnitten 12b und 12c gebildet. Die beiden Abschnitte 12b, 12c weisen Aufnahmen 111 gemäß dem Sicherungselement 12 des zweiten Ausführungsbeispiels nach Fig. 4-4a auf. Das Sicherungselement 12 ist über den oberen Rand der Belagrückenplatte 5a um die Führungsaufnahme 5'c herum aufgesetzt wobei der Abschnitt 12b mit einer Nut 11h am Fußabschnitt 11c des Stiftelementes 11 in Eingriff steht. Das Stiftelement 11 ist auf diese Weise axial in der Führungsaufnahme 5'c fixiert, da die Abschnitte 12b und 12c des Sicherungselementes 12 auf beiden Seiten der Belagrückenplatte 5a anliegen.

Der Kopfabschnitt 11a des Stiftelementes 11 erstreckt sich in positiver y-Richtung durch die Aufnahme 8d des Zwischenabschnitts 8'b hindurch und steht von diesem hervor. Dabei ist der Kopfabschnitt 11a im Außendurchmesser größer als der Durchmesser bzw. Durchlassquerschnitt der Aufnahme 8d. Dieser größere Außendurchmesser des Kopfabschnitts 11a wird nach Montage des Belaghaltebügels 8 durch Stauchung o.dgl. geformt, um eine axiale Sicherung des Belaghaltebügels 8 in y-Richtung zu bilden. Natürlich kann auch eine Axialsicherung wie in Fig. 8-8a gezeigt zur Anwendung kommen. Der Zwischenabschnitt 8'b des Belaghaltebügels 8 geht in dieser Ausführung direkt in den Endabschnitt 8b gemäß der ersten Variante nach Fig. 7 über.

In der Ausführung der Variante nach Fig. 9a ist das Sicherungselement 12 auch U-förmig mit einem Körper 12a und zwei Abschnitten 12b und 12c gebildet. Der Abschnitt 12b liegt an der Seite der Rückenplatte 5a an, welche von der Bremsscheibe 2 weg weist und ist mit der Rückenplatte 5a in hier nicht dargestellter Weise verbunden, z.B. verschweißt, verschraubt, U-förmig (wie in Fig. 9) o.dgl., und mit einem laschenförmigen Abschnitt 12f ähnlich der Variante nach Fig. 5-5a versehen. Der andere Abschnitt 12c ist in y-Richtung vor dem Abschnitt 12b angeordnet, d.h. weiter von der Seite der Rückenplatte 5a entfernt, an welcher der Abschnitt 12b anliegt. Die beiden Abschnitte 12b, 12c weisen Aufnahmen 111 gemäß dem Sicherungselement 12 des zweiten Ausführungsbeispiels nach Fig. 4-4a auf. Die Aufnahme 111 des Abschnitts 12b ist eine Art Langloch, und die Aufnahme 111 des Abschnitts 12c weist eine U-Form auf.

Das Stiftelement 11 ist in seiner Längsrichtung hier in folgende Abschnitte hintereinander unterteilt: Kopfabschnitt 11a mit einem Halteabschnitt 115, Körperabschnitt 116, Fixierabschnitt 117, Nut 11h und Fußabschnitt 11c. Der Halteabschnitt 115 wird nach Montage des Belaghaltebügels 8 mit einem ovalförmigen Querschnitt, z.B. durch Stauchung, versehen, dessen größte Ausdehnung in x-Richtung verläuft. Der Körperabschnitt 116 weist einen kreisrunden Querschnitt auf. Der Fixierabschnitt 117 weist einen ovalen Querschnitt schon seit der Fertigung auf, der jedoch zu dem ovalen Querschnitt des Halteabschnitts 115 um die Längsachse des Stiftelementes 11, die in y-Richtung verläuft, um ca. 90° verdreht angeordnet ist, so dass die größte Ausdehnung des ovalen Querschnitts des Fixierabschnitts 117 in z-Richtung verläuft. Die Nut 11h weist einen kleineren Durchmesser auf als ein Außendurchmesser des Fußabschnitts 11c.

Die Aufnahme 8d des Belaghaltebügels 8 ist hier ein Langloch, welches sich in z-Richtung erstreckt.

Das Stiftelement 11 wird mit dem Fußabschnitt 11c voran in negativer y-Richtung durch die U-förmigen Aufnahmen 111 des Sicherungselementes 12 in die Führungsaufnahme 5'c (siehe Fig. 9) eingesteckt, wobei die Innenkanten der Aufnahme 111 der Abschnitte 12b und 12f des Sicherungselementes 12 mit der Nut 11h in Eingriff kommen und der laschenförmige Abschnitt 12f mit dem Körper 12a in der Verbindung 14 verbunden wird, z.B. durch Verschweißen. Das Stiftelement 11 ist auf diese Weise axial gegenüber der Belagrückenplatte 5a fest gelegt. Eine Verschiebung in negativer y-Richtung in die Belagrückenplatte 5a hinein wird durch den Anschlag des Sicherungsabschnitts 117 am Sicherungselement 12 verhindert, welches seinerseits an der Belagrückenplatte 5a anliegt. In positiver y-Richtung verhindert der Eingriff der Abschnitte 12b und 12f des Sicherungselementes 12 in der Nut 11h des Stiftelementes 11 eine Verschiebung des Stiftelementes 12, da die Nut 11h einen kleineren Innendurchmesser aufweist als der Fußabschnitt 11c, und weil das Sicherungselement 12 an der Belagrückenplatte 5a fixiert ist.

Beim Einsetzen des Stiftelementes 11 wird der Fixierabschnitt 117 mit seinem ovalen Querschnitt so um die Längsachse des Stiftelementes 11 verdreht, dass der Fixierabschnitt 117 in die Aufnahme 111 des Abschnitts 12c des Sicherungselementes 12 eingeschoben werden kann und der Fixierabschnitt 117 in dieser Aufnahme 111 angeordnet ist, wie in Fig. 9a deutlich zu erkennen ist. Die Aufnahme 111 des Abschnitts 12c des Sicherungselementes 12 bildet zusammen mit dem ovalen Querschnitt des Fixierabschnitts 117 des Stiftelementes 11 eine Verdrehsicherung des Stiftelementes 11 um seine Längsachse, d.h. hier um die y-Richtung herum.

Nach Montage des Belaghaltebügels 8 steht der Kopfabschnitt 11a des Stiftelementes 11 in positiver y-Richtung durch die Aufnahme 8d des Endabschnitts 8b des Belaghaltebügels 8 von diesem hervor. Dann wird der ovale Querschnitt des Halteabschnitts 115 so angeformt, dass die größte Ausdehnung des ovalen Querschnitts in x-Richtung verläuft und somit eine axiale Sicherung des Belaghaltebügels in y-Richtung bildet.

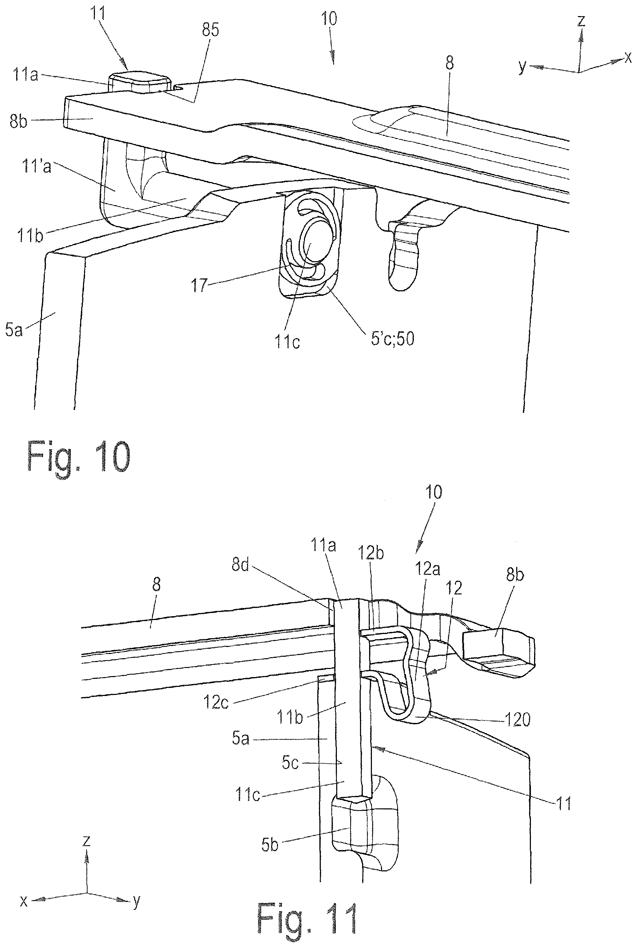

Ein weiteres Ausführungsbeispiel zeigt Fig. 10. Das Stiftelement 11 ist mit seinem Fußabschnitt 11c in der Belagrückenplatte 5a in der Führungsaufnahme 5'c befestigt. Auf der Seite der Belagrückenplatte 5a, die zur Bremsscheibe 2 weist, ist um die Führungsaufnahme 5'c herum eine Ausnehmung 50 eingeformt, welche zur Klemmung eines Klemmelementes 17 dient. Das Klemmelement 17 fixiert das Stiftelement 11 axial gegenüber der Belagrückenplatte 5a und bildet gleichzeitig eine Verdrehsicherung des Stiftelementes 11 um die y-Richtung herum. Von dem Fußabschnitt 11c ausgehend schließt sich in y-Richtung der Körper 11b an, welcher dann um ca. 90° in einem Verbindungsabschnitt 11'a in den Kopfabschnitt 11a übergeht, der sich in z-Richtung nach oben erstreckt. Das obere Ende des Kopfabschnitts 11a steht in Eingriff mit einer Ausnehmung 85, die hier zentral in dem Rand des leicht nach unten gekröpften Endabschnitts 8b des Belaghaltebügels 8 eingeformt ist. Damit wird eine axiale Sicherung gebildet.

Bei allen Ausführungen, die in den Figuren 7-10 beschrieben sind, ist der Belaghaltebügel 8 auch gegen Querbewegungen festgelegt.

In den Figuren 11-15 sind verschiedene Ausführungsbeispiele von Vertikalsicherungen von Belaghaltebügeln 8 gezeigt. Der Begriff Vertikalsicherung bedeutet, dass das Stiftelement 11 in vertikaler Richtung, also in z-Richtung, angeordnet ist.

Fig. 11, 12, 14 zeigen Varianten des ersten Ausführungsbeispiels nach Fig. 2-3.

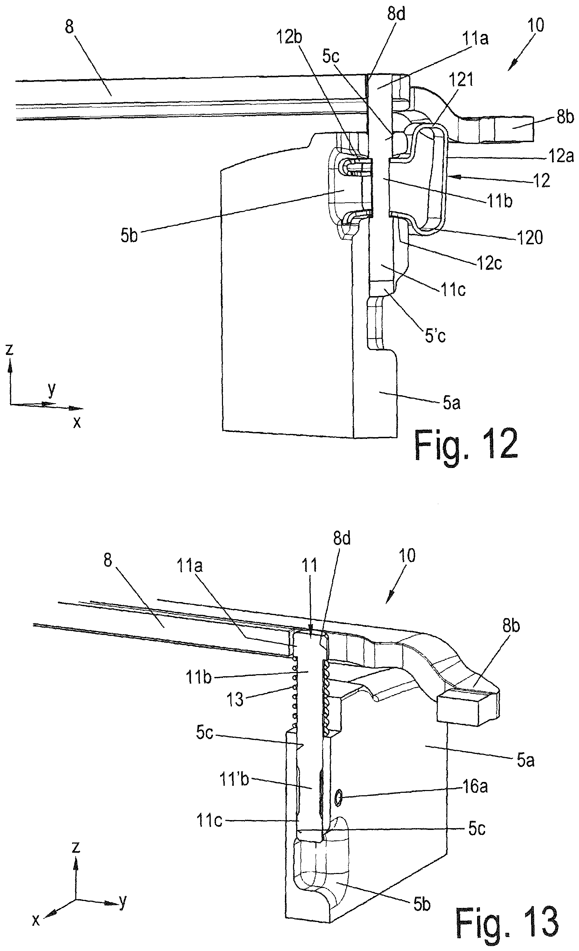

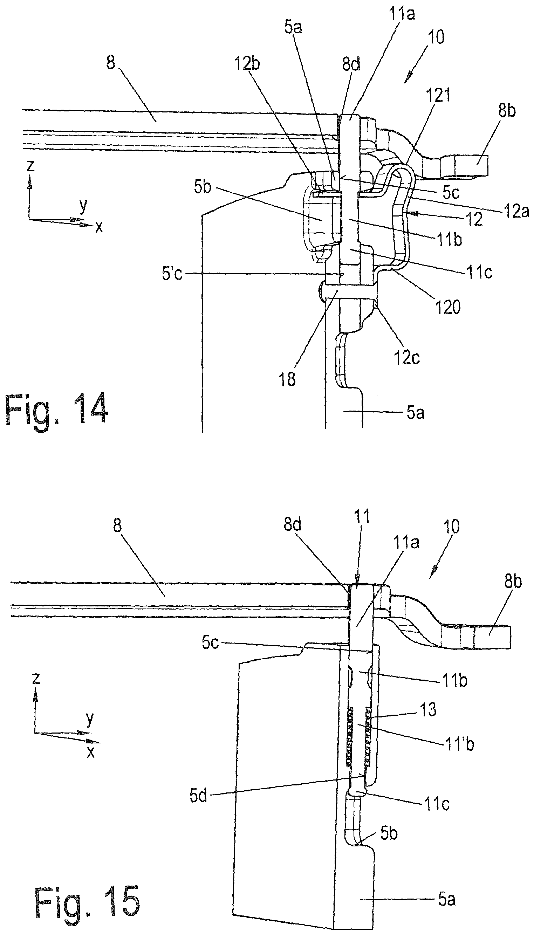

Fig. 13 und 15 stellen weitere Varianten dar.

In der Variante nach Fig. 11 ist das Sicherungselement 12 als federnde Klammer mit zwei Funktionen (Sicherung und Vorspannungserzeugung) mit einem Abschnitt 12c auf dem oberen Rand der Belagrückenplatte 5a befestigt, wobei der andere Abschnitt 12b des Sicherungselementes 12 mit dem Kopfabschnitt 11a des Stiftelementes 11 fest verbunden ist. Das Stiftelement 11 weist hier einen rechteckigen Querschnitt auf und ist in nur einer Führungsaufnahme 5c der Belagrückenplatte 5a in z-Richtung verschiebbar geführt aufgenommen.

Das Sicherungselement 12 weist hier einen leicht gewellten Körper 12a auf, an dem unten der Abschnitt 12c über einen bogenförmigen Federabschnitt 120 angebracht ist.

Die Variante nach Fig. 12 zeigt, dass das Sicherungselement 12 wie in dem ersten Ausführungsbeispiel nach Fig. 3 in der Öffnung 5b der Belagrückenplatte 5a mit dem Körper 11b des Stiftelementes 11 in Eingriff steht.

Das Sicherungselement 12 weist hier den Körper 12a auf, an welchem unten dem Federabschnitt 120 mit dem Abschnitt 12c angebracht ist. Oben ist der Körper 12a über einen anderen bogenförmigen Federabschnitt 121 mit dem Abschnitt 12b verbunden. Im Gegensatz zu dem ersten Ausführungsbeispiel nach Fig. 3 ist das Ende des Abschnitts 12b in der Öffnung 5b um 180° umgebogen. Sein Ende kann einen weiteren Kontakt mit dem Körper 11b des Stiftelementes 11 bilden.

Fig. 13 zeigt eine weitere Variante, bei welcher nur ein Federelement 13 vorgesehen ist. Eine axiale Begrenzung des Hubs des Stiftelementes 11 wird dadurch erzielt, dass ein Sicherungsbolzen 16a mit dem Bereich des Körpers 11'b, dessen Querschnitt bzw. Durchmesser gegenüber dem Querschnitt bzw. Durchmesser des Fußabschnitts 11c reduziert ist, in Eingriff steht. Dieser Sicherungsbolzen 16a wird in y-Richtung in die Belagrückenplatte 5a eingepresst. Natürlich ist auch ein Gewindebolzen oder eine Madenschraube möglich. Der Hub des Stiftelementes 11 wird durch Schultern, die den reduzierten Querschnitts- bzw. Durchmesserbereich des Körpers 11'b begrenzen, als Anschlag in Zusammenwirkung mit dem Sicherungsbolzen 16a festgelegt.

Das Federelement 13 ist zwischen Kopfabschnitt 11a des Stiftelementes 11 und dem oberen Rand der Belagrückenplatte 5a eingespannt, wobei es den Körper 11b des Stiftelementes 11 umgibt. Der Kopfabschnitt 11a des Stiftelementes 11 steht in Eingriff mit der Aufnahme 8d des Belaghaltebügels 8. Der Körper 11b ist durch einen weiteren Körper 11'b, welcher einen geringeren Querschnitt als der Körper 11b aufweist, nach unten verlängert. Das Ende des oberen Körpers 11b und der Fußabschnitt 11c sind in der Führungsaufnahme 5c der Belagrückenplatte 5a aufgenommen und an der Wandung der Führungsaufnahme 5c geführt. Der weitere Körper 11'b, welcher dazwischen liegt, ist auch in der Führungsaufnahme 5c ohne deren Wandung zu berühren angeordnet.

Unter den Begriffen "Außenseite" oder "außen" im Zusammenhang mit der Belagrückenplatte 5a ist deren Seite oder der Bereich dieser zu verstehen, die von der Bremsscheibe 2 weg weist.

Die Variante der Fig. 14 unterscheidet sich von der in Fig. 12 dargestellten Variante dadurch, dass der Abschnitt 12c des Sicherungselementes 12 mittels eines Befestigungselementes 18, z.B. ein Niet oder Schraubbolzen o.ä., an der Außenseite der Belagrückenplatte 5a befestigt ist. Der Abschnitt 12b ist über den Federabschnitt 121 an dem Körper 12a des Sicherungselementes 12 angebracht und erstreckt sich mit seinem anderen Ende in die Öffnung 5b zur Zusammenwirkung mit dem Stiftelement 11 hinein. Das Stiftelement 11 ist mit dem Kopfabschnitt 11a in der oberen Führungsaufnahme 5c und mit dem Fußabschnitt 11c in der unteren Führungsaufnahme 5'c der Belagrückenplatte 5a verschiebbar geführt (wie im ersten Ausführungsbeispiel nach Fig. 3).

Fig. 15 stellt eine Variante der Variante nach Fig. 13 dar. Das Federelement 13 ist hier in der Führungsaufnahme 5c in einem unteren Bereich angeordnet und umgibt den verlängerten Körper 11'b. Der Körper 11b, der sich darüber in der Führungsaufnahme 5c in deren oberen Bereich befindet, steht mit zwei Verdickungen mit der Wandung der Führungsaufnahme 5c in Kontakt. Das Federelement 13 stützt sich an der unteren Verdickung des Körpers 11b und an dem unteren Ende der Führungsaufnahme 5c an einer Schulter einer Querschnittsreduzierung ab. Der verlängerte Körper 11'b erstreckt sich durch diese Querschnittsreduzierung durch eine weitere Führungsaufnahme 5d nach unten in negativer z-Richtung, wobei ein verdickter Fußabschnitt 11c außen hervorsteht und eine axiale Sicherung des Stiftelementes 11 bildet. Die Verdickung des Fußabschnitts 11c wird erst nach Montage des Stiftelementes 11 und des Federelementes 13 durch eine Materialumformung hergestellt, z.B. durch Vertaumeln o.ä.

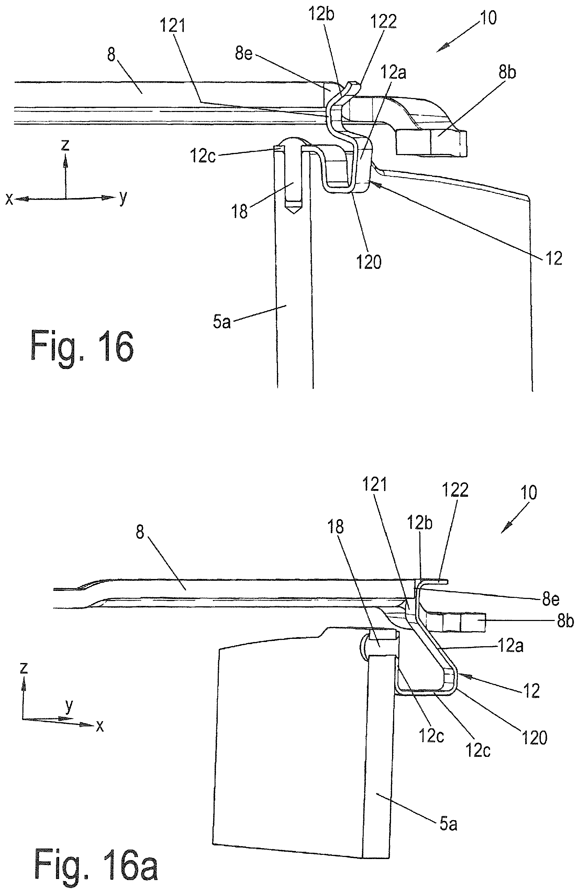

In den Figuren 16-19 sind verschiedene Ausführungsbeispiele von Sicherungselementen dargestellt.

Fig. 16 zeigt ein Sicherungselement 12 in Form einer Federklammer mit einem Körper 12a, an dem unten dem Federabschnitt 120 mit dem Abschnitt 12c angebracht ist. Der Abschnitt 12c erstreckt sich auf den Rand der Belagrückenplatte 5a und ist dort auf dieser mittels eines Befestigungselementes 18, z.B. ein Niet oder eine Schrauben, fest angebracht. An der oberen Seite des Körpers 12a des Sicherungselementes 12 ist der Federabschnitt 121 angeformt, welcher sich erst in negativer y-Richtung und dann nach oben in z-Richtung erstreckt und in Kontakt mit einer Wandung einer Öffnung 8e des Endabschnitts 8b des Belaghaltebügels 8 steht. An dem Federabschnitt 121 schließt sich der Abschnitt 12b an, welcher einen Endabschnitt 122 aufweist, der wieder in positive y-Richtung weist. Damit ist ein schräger Abschnitt gebildet, welcher ein Einrasten des aus Bogenabschnitt 122 und Abschnitt 12b gebildeten Federarms in der Öffnung 8e erleichtert. Zusätzlich erleichtert der Endabschnitt 122 ein Herunterdrücken des federnden Sicherungselementes 12 in negativer z-Richtung bei Demontage des Belaghaltebügels 8. Es können auch zwei oder mehrere Sicherungselemente 12 nebeneinander vorgesehen sein.

Fig. 16a zeigt eine Variante des Sicherungselementes 12 nach Fig. 16. An den Körper 12a ist unten zunächst ein bogenförmiger Federabschnitt 120 angeformt, welcher so gebogen ist, dass der sich anschließende Abschnitt 12c im Wesentlichen parallel zu der Bremsscheibendrehachse 2a in negativer y-Richtung verläuft und vor der Außenseiten der Belagrückenplatte 5a um 90° nach oben in z-Richtung abgebogen ist. Dieses nach oben, an der Außenseite der Belagrückenplatte 5a anliegende Stück des Abschnitts 12c ist mit einem Befestigungselement 18, z.B. Niet, mit der Belagrückenplatte 5a fest verbunden.

Der Körper 12a des Sicherungselementes 12 erstreckt sich um ca. 45° schräg zur Bremsscheibe 2 und nach oben hin, wobei er an seinem Ende im Federabschnitt 121 in z-Richtung in den Abschnitt 12b übergeht, der mit einem geraden Stück wie in Fig. 16 mit der Wandung der Öffnung 8e des Endabschnitts 8b des Belaghaltebügels 8 in Kontakt steht. Auch hier ist der Endabschnitt 122 vorgesehen, der in positiver y-Richtung abgebogen ist. Auch dieser Endabschnitt 122 erleichtert ein Herunterdrücken des federnden Sicherungselementes 12 in negativer z-Richtung bei Demontage des Belaghaltebügels 8.

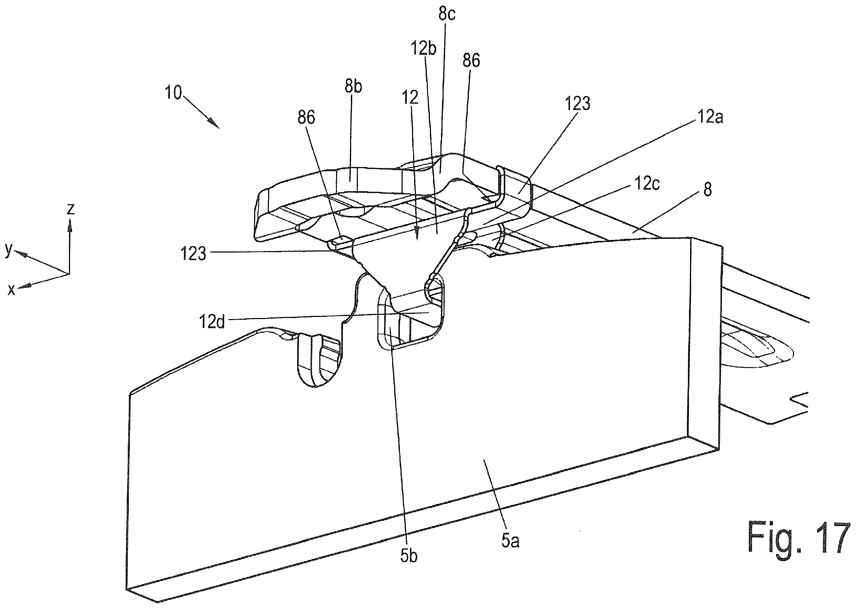

In Fig. 17 ist der Belaghaltebügel 8 nach der Ausführung nach Fig. 7d ausgebildet, wobei an den Seiten des Körpers des Belaghaltebügels 8 kurz vor dem Übergangsabschnitt 8c beidseitig rechteckige Ausnehmungen 86 eingeformt sind, in welchen jeweils ein umgebogener Klammerabschnitt 123 des Sicherungselementes 12 eingreift.

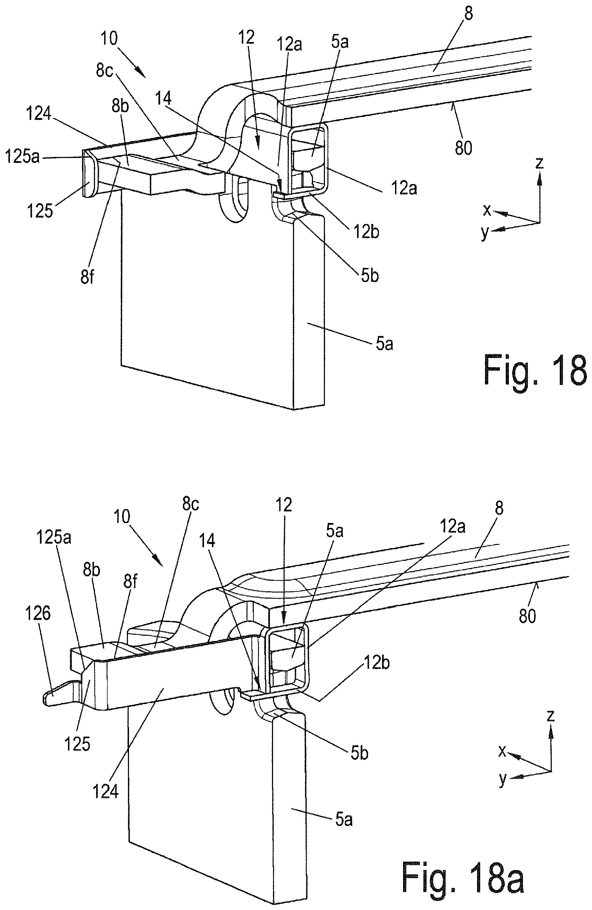

Der Körper 12a des Sicherungselementes 12 weist hier eine längliche Rechteckform auf und ist oberhalb des Rands der Belagrückenplatte 5a in x-Richtung unter dem Belaghaltebügel 8 angeordnet. An den seitlichen Enden des Körpers 12a ist jeweils einer der umgebogenen Klammerabschnitte 123 angeformt. Beiderseits des länglichen, rechteckigen Körpers 12a sind die Abschnitte 12b und 12c in Trapezform jeweils um 90° nach unten in negativer z-Richtung abgebogen, wobei die Belagrückenplatte 5a zwischen diesen Abschnitten 12b und 12c angeordnet ist. An dem unteren Ende des trapezförmigen Abschnitts 12b ist ein schmaler, länglicher Abschnitt 12d angeformt, welcher in negativer y-Richtung um 90° zur Bremsscheibe 2 hin abgebogen ist und sich durch die Öffnung 5b der Belagrückenplatte 5a hindurch zu dem anderen trapezförmigen Abschnitt 12c hin erstreckt und mit diesem in ähnlicher Weise in einer Verbindung 14 wie in Fig. 4a (oder Fig. 18-18a) gezeigt nach Montage fest verbunden ist.

Zur Montage/Demontage mit/von dem Belaghaltebügel 8 werden die umgebogenen Federarme in Form der Endabschnitte 123 geöffnet (beispielsweise mit einem Spreizwerkzeug, z.B. Spreizzange), damit der Belaghaltebügel 8 in den Bremssattel 3 eingesetzt/demontiert werden kann. Um eine übermäßige Spreizung der Endabschnitte 123 des klammerartigen Sicherungselementes 12 und damit plastischen Deformationen vorzubeugen, kann am Bremssattel 3 oder am Belaghaltebügel 8 eine entsprechende Störkontur (Anschlag) vorgesehen werden.

In einer weiteren Variante, die Fig. 18-18a zeigen, ist ein Sicherungselement 12 mit dem Körper 12a in einer Hüllenform um den Rand der Belagrückenplatte 5a herum angeordnet, wobei sich ein Abschnitt 12b durch die Öffnung 5b erstreckt, dessen Endabschnitt durch die Öffnung 5b nach außen hervorsteht und mit dem außenliegenden Abschnitt des Körpers 12a in einer Verbindung 14 fest verbunden ist, z.B. geschweißt o.ä.

An den Abschnitt des Körpers 12a, welcher sich auf der Außenseite der Belagrückenplatte 5a befindet, ist ein Laschenabschnitt 124 angeformt, der an seinem freien Ende eine um 90° umgebogene Lasche 125 aufweist. Diese Lasche 125 ist in der Variante in Fig. 18a noch mit einem Vorsprung 126 zur Demontage/Montage versehen.

Der Laschenabschnitt 124 verläuft in einer y-z-Ebene und erstreckt sich in positiver y-Richtung, wobei er an einer Seite 8f bzw. einem Abschnitt des Endabschnitts 8b des Belaghaltebügels 8 anliegt. Die Lasche 125 liegt in einer x-z-Ebene und umgibt eine Ecke eines Abschnitts oder eine Ausnehmung des Endabschnitts 8b. Es können Laschenabschnitte 124 auf beiden Seiten 8f des Endabschnitts 8b oder in dessen Öffnung 8e vorgesehen sein.

Zur Demontage werden die Laschenabschnitte 124, beispielsweise mit einem Werkzeuge (Zange), zusammengedrückt. Ein Spalt zwischen diesen beiden (gegenüberliegend angeordneten) Laschenabschnitten 124, die auch als Federarme bezeichnet werden können, kann dabei so gestaltet sein, dass eine plastische Deformation vermieden wird, da sich beide Laschenabschnitte 124 dann gegenseitig blockieren bzw. einen Anschlag bilden. Bei Montage werden die beiden Laschenabschnitte 124 über Schrägen 125a bzw. Abrundungen und die Auflage des Zwischenabschnitts 8c des Belaghaltebügels 8 gespreizt.

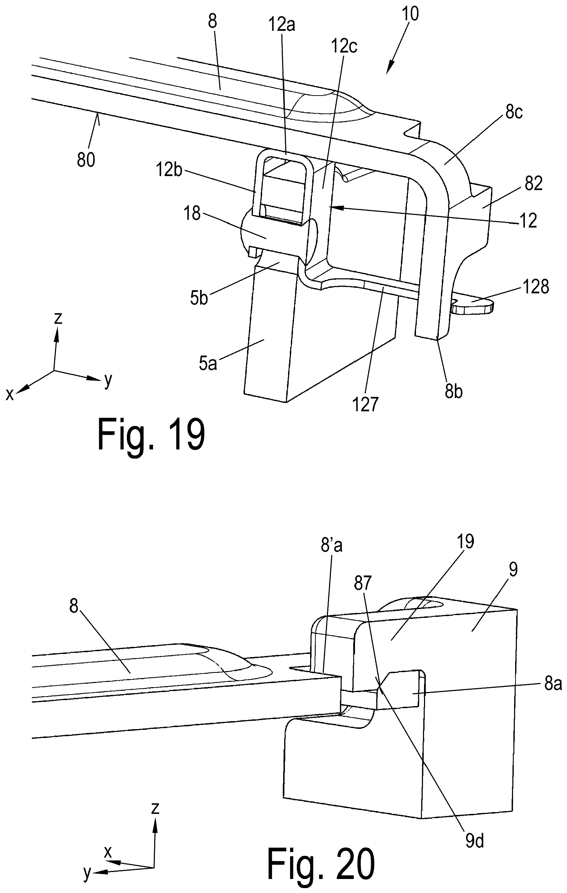

Fig. 19 stellt eine weitere Variante zu Fig. 18-18a dar. Anstelle eines Laschenabschnitts 124 (Fig. 18-18a) ist ein Hakenabschnitt 127 mit einem Haken 128 vorgesehen. Der Körper 12a des Sicherungselementes 12 ist U-förmig mit den Abschnitten 12b und 12c über den Rand der Belagrückenplatte 5a angeordnet und mit dieser durch eine Befestigungselement 18 (Niete, Schraube, o.ä.) fest verbunden. Der Abschnitt 12c geht an seinem unteren Ende über einen 90°-Bogen in den Hakenabschnitt 127 über, der sich in positiver y-Richtung erstreckt. Der Haken 128 steht in Eingriff mit dem Endabschnitt 8b des Belaghaltebügels 8. Es können zwei oder auch mehr Hakenabschnitte 127 mit Haken 128 entweder an einem Sicherungselement 12 oder an mehreren vorgesehen sein.

Die Figuren 20-23 stellen verschiedene Ausführungsbeispiele von zusätzlichen Sicherungen dar.

Fig. 20 zeigt dazu den Lagerabschnitt 9 auf der Zuspannseite des Bremssattels 3. Ein Halteabschnitt 19 steht mit dem zuspannseitigen Endabschnitt 8a des Belaghaltebügels 8 in Eingriff. Der Halteabschnitt 19 ist dabei hakenförmig ausgestaltet und greift in eine Ausnehmung 8'a des Belaghaltebügels 8 ein. Der Hakenabschnitt 19 weist eine Schräge 9d auf, welche mit einer Schräge 87 in der Ausnehmung 8'a des zuspannseitigen Endabschnitts 8a des Belaghaltebügels 8 in Kontakt steht. Damit ist eine Montage erleichtert, wobei eine Rastfunktion gebildet wird und der Belaghaltebügel 8 in y-Richtung fixiert wird.

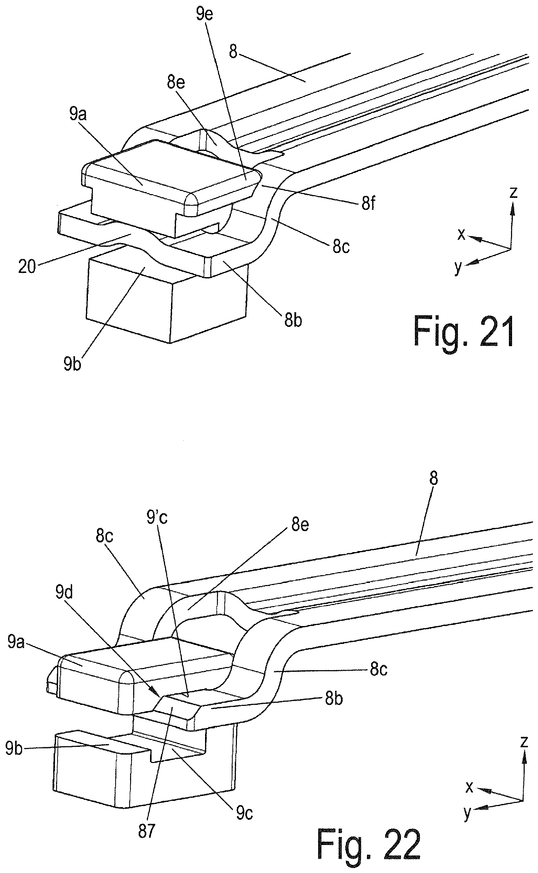

In Fig. 21 weist der rückenseitige Endabschnitt 8b eine Wölbung 20 auf, welche sich in positiver z-Richtung nach oben wölbt und mit der Oberseite der Aufnahme 9b im Halteabschnitt 9a in Kontakt steht. Als ein Übergang zwischen dem Übergangsabschnitt 8c und dem Körper des Belaghaltebügels 8 ist eine Fläche 8f (auch beidseitig) vorgesehen, welche an einem mit ihr korrespondierenden Anlageabschnitt 9e des Halteabschnitts 9a anliegt. Dadurch ist eine zusätzliche Sicherung des Belaghaltebügels 8 in y-Richtung gebildet.

Fig. 22 zeigt die Paarung von Schrägen 87 und 9d an dem Halteabschnitt 9a ähnlich wie beim Lagerabschnitt 9 gemäß Fig. 20. Die Aufnahme 9b des Halteabschnitts 9a weist eine weitere Ausnehmung 9c als Vertiefung in negativer z-Richtung auf. Die Oberseite der Aufnahme 9b ist ebenfalls mit einer Ausnehmung 9'c versehen, welche an ihrer Innenseite die Schräge 9d in x-Richtung aufweist. Der Endabschnitt 8b des Belaghaltebügels 8 ist an seiner Außenseite, die in x-Richtung verläuft, mit der Schräge 87 versehen, welche mit der Schräge 9d in Kontakt steht.

Mit den Schrägen 87 und 9d ist eine zusätzliche Sicherung des Belaghaltebügels 8 in y-Richtung ermöglicht.

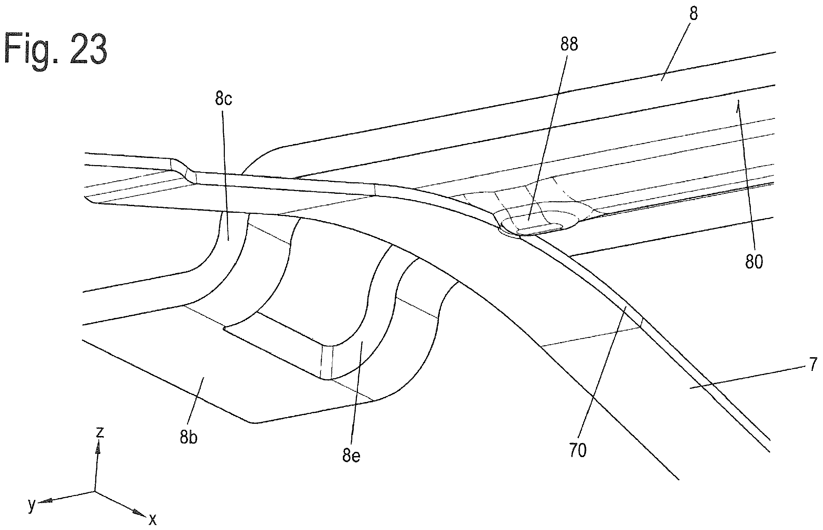

Eine weitere, zusätzliche Sicherung des Belaghaltebügels 8 in y-Richtung ist in Fig. 23 gezeigt. An der Unterseite 80 des Belaghaltebügels 8 ist ein in negativer z-Richtung hervorstehender Anschlag 88 an- oder/und eingeformt, der mit einem Randabschnitt 70 der Belaghaltefeder 7 der rückenseitigen Belagrückenplatte 5a zusammenwirkt. Wenn der Belaghaltebügel 8 als ein Stanzbiegeteil hergestellt wird, kann der Anschlag 88 z.B. durch Eindrücken im Stanzbiegeprozess in einem Arbeitsgang hergestellt werden.

Die Montage des Belaghaltebügels 8 zusammen mit der Sicherungsvorrichtung 10 wird nun kurz beschrieben.

Die Sicherungsvorrichtung 10 gewährleistet einerseits ein automatisches Einrasten des Stiftelementes 11 oder/und des federartigen Sicherungselementes 12 in den dafür vorgesehenen Aufnahmen (entweder in der Belagrückenplatte 5a oder in dem Belaghaltebügel 8) und andererseits eine einfache Lösbarkeit für Servicearbeiten. Bauteile der Sicherungsvorrichtung 10, die mit der Belagrückenplatte 5a oder/und mit dem Belaghaltebügel 8 verbunden sind, können nicht zerstörungsfrei von diesen gelöst werden.

Bei der Montage des Belaghaltebügels 8 werden z.B. die Federarme der federartigen Sicherungselemente 12 elastische so verschoben, dass der Belaghaltebügel 8 im Bremssattel 3 eingesetzt werden kann. Die Federarme bleiben durch den Belaghaltebügel 8 vorgespannt. Nachdem dieser in seine endgültige Position geschoben worden ist, federn die Federarme in ihre ursprüngliche Position wieder zurück. Die Federarme sind nun unbelastet und werden während des Betriebs nicht belastet. Dadurch kann ein Setzen der Federarme (z.B. durch Temperatureinwirkung) vermieden werden. Die umgreifenden Abschnitte (z.B. 123 in Fig. 17, 125) der Federarme verhindern ein Verschieben des Belaghaltebügels 8 in Richtung der Bremsscheibendrehachse 2a, d.h. in y-Richtung. Der Belaghaltebügel ist somit gesichert.

Zur Demontage werden die Federarme an der Belagrückenplatte 5a, beispielsweise mit einem Werkzeug, verschoben, bis die umgreifenden Laschenabschnitte 124 den Belaghaltebügel 8 freigeben. Die Federarme müssen solange in Position gehalten werden, bis der Belaghaltebügel 8 bei der Demontage ausreichend weit verschoben ist, um diese geöffnet zu halten.

Der Bremsbelagsatz 100 mit der Sicherungsvorrichtung 10 kann in allen Scheibenbremsen 1 mit Schiebesattel, insbesondere für Nutzfahrzeuge, eingesetzt werden.

Die oben beschriebenen Ausführungsbeispiele schränken die Erfindung nicht ein. Die Erfindung ist im Rahmen der beigefügten Ansprüche modifizierbar.

### Bezugszeichenliste

- 1: Scheibenbremse
- 2: Bremsscheibe
- 2a: Bremsscheibendrehachse
- 3: Bremssattel
- 3a: Zuspannabschnitt
- 3b: Reaktionsabschnitt
- 3c: Verbindungsabschnitt
- 4, 5: Bremsbelag
- 4a, 5a: Belagrückenplatte
- 5b: Öffnung
- 5c, 5'c, 5d: Führungsaufnahme
- 6, 7: Belaghaltefeder
- 7a: Durchgangsöffnung
- 8: Belaghaltebügel
- 8a, 8b: Endabschnitt
- 8'a: Ausnehmung
- 8'b: Zwischenabschnitt
- 8c: Übergangsabschnitt
- 8d: Aufnahme
- 8e: Öffnung
- 8f: Seite
- 8g: Fläche
- 9: Lagerabschnitt
- 9a: Halteabschnitt
- 9b: Aufnahme
- 9c, 9'c: Ausnehmung
- 9d: Schräge
- 9e: Anlageabschnitt
- 10: Sicherungsvorrichtung
- 11: Stiftelement
- 11a: Kopfabschnitt
- 11'a: Verbindungsabschnitt
- 11b, 11'b: Körper
- 11c: Fußabschnitt
- 11d: Kopf
- 11e: Kragen
- 11f, 11h: Nut
- 11g: Verdickung
- 12: Sicherungselement
- 12a: Körper
- 12b... 12f: Abschnitt
- 13: Federelement
- 14: Verbindung
- 15: Axialsicherung
- 16: Sicherungsabschnitt
- 16a: Sicherungsbolzen
- 17: Klemmelement
- 18: Befestigungselement
- 19: Halteabschnitt
- 20: Wölbung
- 50: Ausnehmung
- 70: Randabschnitt
- 80: Unterseite
- 81: Oberseite
- 82: Vorsprung
- 83, 84: Fingerabschnitt
- 85, 86: Ausnehmung
- 87: Schräge
- 88: Anschlag
- 90: Ausnehmung
- 91: Aufnahme
- 92: Seitenpfosten
- 100: Bremsbelagsatz
- 110: Kragen
- 111: U-förmige Aufnahme
- 112: Aufnahme
- 115: Halteabschnitt
- 116: Körperabschnitt
- 117: Fixierabschnitt
- 120... 121: Federabschnitt
- 122: Endabschnitt
- 123: Klammerabschnitt
- 124: Laschenabschnitt
- 125: Lasche
- 125a: Schräge
- 126: Vorsprung
- 127: Hakenabschnitt
- 128: Haken
- R: Rückenseite
- Z: Zuspannseite
- x, y, z: Koordinaten

## Patentansprüche

1. Scheibenbremse (1) für ein Fahrzeug, insbesondere für ein Nutzfahrzeug, aufweisend eine Bremsscheibe (2) mit einer Bremsscheibendrehachse (2a), einen Bremssattel (3), insbesondere ein Schiebesattel, mit einem Zuspannabschnitt (3a) und einem Rückenabschnitt (3b), mindestens zwei Bremsbeläge (4, 5) mit jeweils einer mit einer Belaghaltefeder (6, 7) versehenen Belagrückenplatte (4a, 5a), die jeweils unter Vorspannung von einem am Bremssattel (3) lösbar befestigten Belaghaltebügel (8) abgestützt sind und von denen ein zuspannseitiger Bremsbelag (4) dem Zuspannabschnitt (3a) zugeordnet ist, und ein rückenseitiger Bremsbelag (5) dem Rückenabschnitt (3b) zugeordnet ist, sowie eine Sicherheitsvorrichtung (10) zur Sicherung der Position des Belaghaltebügels (8), **dadurch gekennzeichnet, dass** die Sicherheitsvorrichtung (10) mindestens ein verschiebbar geführtes Stiftelement (11) aufweist, welches aus einer Ruheposition in eine Eingriffsposition und zurück verschiebbar ist, wobei das mindestens eine Stiftelement (11) in der Eingriffsposition eine lösbare Verbindung zwischen dem Belaghaltebügel (8) und der Belagrückenplatte (5a) des rückenseitigen Bremsbelags (5) bildet.

2. Scheibenbremse (1) nach Anspruch 1, **dadurch gekennzeichnet, dass** die Sicherheitsvorrichtung (10) mindestens ein Federelement (13) zur Vorspannung des mindestens einen verschiebbar geführten Stiftelementes (11) in die Eingriffsposition umfasst, wobei das mindestens eine Stiftelement (11) bei Montage/Demontage gegen die Vorspannkraft des Federelementes (13) in die Ruheposition verschiebbar ist.

3. Scheibenbremse (1) nach Anspruch 1 oder 2, **dadurch gekennzeichnet, dass** die Sicherheitsvorrichtung (10) mindestens ein Sicherungselement (12) aufweist, welches eine Begrenzung eines Hubs des mindestens einen Stiftelementes (11) bildet.

4. Scheibenbremse (1) nach Anspruch 3, **dadurch gekennzeichnet, dass** das mindestens eine Sicherungselement (12) die Funktion des mindestens einen Federelementes (13) zur Vorspannung des mindestens einen verschiebbar geführten Stiftelementes (11) aufweist.

5. Scheibenbremse (1) nach Anspruch 4, **dadurch gekennzeichnet, dass** das mindestens eine Sicherungselement (12) als eine elastische Klammer ausgebildet ist, welche mit einem Abschnitt (12b) mit dem mindestens einen Stiftelement (11) verbunden ist und mit einem anderen Abschnitt (12c) an einem ortsfesten Abschnitt, in oder an welchem das mindestens eine verschiebbare Stiftelement (11) verschiebbar geführt ist, verbunden ist oder in Kontakt steht.

6. Scheibenbremse (1) nach Anspruch 3, **dadurch gekennzeichnet, dass** das mindestens eine Sicherungselement (12) mindestens einen Abschnitt (12b, 12c), welcher mit dem mindestens einen Stiftelement (11) verbunden ist, und mindestens einen weiteren Abschnitt (12d, 12e), welcher mit einem ortsfesten Abschnitt, in oder an dem das mindestens eine verschiebbare Stiftelement (11) verschiebbar geführt ist, verbunden ist oder in Kontakt steht, aufweist.

7. Scheibenbremse (1) nach Anspruch 6, **dadurch gekennzeichnet, dass** das mindestens eine verschiebbare Stiftelement (11) in mindestens einer Führungsaufnahme (5c, 5'c) der Belagrückenplatte (5a) des rückenseitigen Bremsbelags (5) verschiebbar geführt ist, und dass der mindestens eine Abschnitt (12b, 12c) des mindestens einen Sicherungselementes (12), welcher mit dem mindestens einen Stiftelement (11) verbunden ist, mit dem mindestens einen weiteren Abschnitt (12d, 12e) des mindestens einen Sicherungselementes (12) in einer Verbindung (14) unlösbar verbunden ist, wobei die so verbundenen Abschnitte (12b, 12c und 12d, 12e) einen Abschnitt der Belagrückenplatte (5a) umgreifen und sich durch eine Öffnung (5b) der Belagrückenplatte (5a) hindurch erstrecken.

8. Scheibenbremse (1) nach Anspruch 6, **dadurch gekennzeichnet, dass** das mindestens eine verschiebbare Stiftelement (11) in mindestens einer Führungsaufnahme (5c, 5'c) der rückenseitigen Belagrückenplatte (5a) des rückenseitigen Bremsbelags (5) verschiebbar geführt ist, und dass der mindestens eine Abschnitt (12b) des mindestens einen Sicherungselementes (12), welcher mit dem mindestens einen Stiftelement (11) verbunden ist, mit dem mindestens einen weiteren Abschnitt (12c) des mindestens einen Sicherungselementes (12) durch einen weiteren Abschnitt (12f) des mindestens einen Sicherungselementes (12) in einer Verbindung (14) unlösbar verbunden ist, wobei das mindestens eine Sicherungselement (12) in einer Öffnung (5b) der rückenseitigen Belagrückenplatte (5a) angeordnet ist.

9. Scheibenbremse (1) nach Anspruch 6, **dadurch gekennzeichnet, dass** das mindestens eine verschiebbare Stiftelement (11) in mindestens einer Führungsaufnahme (5c, 5'c) der rückenseitigen Belagrückenplatte (5a) des rückenseitigen Bremsbelags (5) verschiebbar geführt ist, und dass der mindestens eine Abschnitt (12b) des mindestens einen Sicherungselementes (12) mit dem mindestens einen Stiftelement (11) verbunden ist, und dass der mindestens eine weitere Abschnitt (12c) an der rückenseitigen Belagrückenplatte (5a) des rückenseitigen Bremsbelags (5) fest angebracht ist.

10. Scheibenbremse (1) nach Anspruch 3, **dadurch gekennzeichnet, dass** das mindestens eine Sicherungselement (12) ein Wellensicherungsring ist, der mit dem mindestens einen verschiebbar geführten Stiftelement (11) verbunden ist.

11. Scheibenbremse (1) nach Anspruch 3, **dadurch gekennzeichnet, dass** das mindestens eine Sicherungselement (12) durch eine Materialumformung, z.B. Stauchen, Vertaumeln, Nieten oder dergleichen, des mindestens einen Stiftelementes (11) geformt ist.

12. Scheibenbremse (1) nach Anspruch 11, **dadurch gekennzeichnet, dass** das mindestens eine verschiebbar geführte Stiftelement (11) in einer Aufnahme (8b) des Belaghaltebügels (8) verschiebbar geführt und am Belaghaltebügel (8) gehalten ist, wobei ein Kopf (11d) des mindestens einen verschiebbar geführten Stiftelementes (11) als das mindestens eine Sicherungselement (12) geformt ist, und wobei ein Fußabschnitt (11c) des mindestens einen verschiebbar geführten Stiftelementes (11) mit einer Führungsaufnahme (5c) der rückenseitigen Belagrückenplatte (5a) des rückenseitigen Bremsbelags (5) in der Eingriffsposition in Eingriff steht.

13. Scheibenbremse (1) nach einem der vorhergehenden Ansprüche, **dadurch gekennzeichnet, dass** eine zusätzliche Sicherung dergestalt vorgesehen ist, dass der Belaghaltebügel (8) an seiner Unterseite (80) im Bereich der rückenseitigen Belagträgerplatte (5a) einen von der Unterseite (80) hervorstehenden Anschlag (88) aufweist, welcher mit einem zur Bremsscheibe (2) der Scheibenbremse (1) weisenden Randabschnitt (70) der Belaghaltefeder (7) der rückenseitigen Belagträgerplatte (5a) in Kontakt steht.

14. Scheibenbremse (1) nach einem der vorhergehenden Ansprüche, **dadurch gekennzeichnet, dass** mindestens einer von Endabschnitten (8a, 8b) des Belaghaltebügels (8) eine formschlüssige Verbindung mit einem jeweiligen zugehörigen Lager-/Halteabschnitt (9, 9a) mit untereinander in Kontakt stehenden Schrägen (9d, 87) aufweist.

15. Bremsbelagsatz (100) für eine Scheibenbremse (1) nach einem der Ansprüche 1 bis 11, umfassend mindestens einen zuspannseitigen Bremsbelag (4) und mindestens einen rückenseitigen Bremsbelag (5) mit jeweils einer mit einer Belaghaltefeder (6, 7) versehenen Belagrückenplatte (4a, 5a), einen Belaghaltebügel (8) und eine Sicherungsvorrichtung (10), **dadurch gekennzeichnet, dass** die Sicherheitsvorrichtung (10) mindestens ein verschiebbar geführtes Stiftelement (11) aufweist, welches aus einer Ruheposition in eine Eingriffsposition und zurück verschiebbar ist, wobei das mindestens eine verschiebbare Stiftelement (11) in mindestens einer Führungsaufnahme (5c, 5'c) der Belagrückenplatte (5a) des rückenseitigen Bremsbelags (5) verschiebbar geführt ist.

16. Bremsbelagsatz (100) für eine Scheibenbremse (1) nach einem der Ansprüche 1 bis 3, 11 oder 12, umfassend mindestens einen zuspannseitigen Bremsbelag (4) und mindestens einen rückenseitigen Bremsbelag (5) mit jeweils einer mit einer Belaghaltefeder (6, 7) versehenen Belagrückenplatte (4a, 5a), einen Belaghaltebügel (8) und eine Sicherungsvorrichtung (10), **dadurch gekennzeichnet, dass** die Sicherheitsvorrichtung (10) mindestens ein verschiebbar geführtes Stiftelement (11) aufweist, welches aus einer Ruheposition in eine Eingriffsposition und zurück verschiebbar ist, wobei das mindestens eine verschiebbar geführte Stiftelement (11) in einer Aufnahme (8b) des Belaghaltebügels (8) verschiebbar geführt und am Belaghaltebügel (8) gehalten ist.

## Claims

1. Disc brake (1) for a vehicle, in particular for a utility vehicle, comprising a brake disc (2) with a brake disc rotation axis (2a), a brake caliper (3), in particular a disc caliper, with an application section (3a) and a rear section (3b), at least two brake pads (4, 5) each with a brake pad backing-plate (4a, 5a) provided with a pad holding spring (6, 7), in each case supported under prestress by a pad retaining clip (8) fixed detachably to the brake caliper (3), and of which a brake pad (4) on the application side is associated with the application section (3a) and a brake pad (5) on the rear side is associated with the rear section (3b), and a securing device (10) for securing the position of the pad retaining clip (8), **characterised in that** the securing device (10) comprises at least one movably guided stud element (11) which can be moved from a rest position to an engaged position and back again, and in the said engaged position the at least one stud element ∥(11) forms a detachable connection between the pad retaining clip (8) and the pad backing-plate (5a) of the brake pad (5) on the rear side.

2. Disc brake (1) according to Claim 1, **characterised in that** the securing device (10) comprises at least one spring element (13) for prestressing the at least one movably guided stud element (11) towards the engagement position, and during assembly or dismantling the at least one stud element (11) can be moved in opposition to the prestressing force of the spring element (13).

3. Disc brake (1) according to Claims 1 or 2, **characterised in that** the securing device (10) comprises at least one securing element (12), which limits the stroke of the at least one stud element (11).

4. Disc brake (1) according to Claim 3, **characterised in that** the at least one securing element (12) has the function of the at least one spring element (13) for prestressing the at least one movably guided stud element (11).

5. Disc brake (1) according to Claim 4, **characterised in that** at least one securing element (12) is in the form of an elastic clamp, which is connected with a section (12b) to the at least one stud element (11), and with another section (12c) is connected to or in contact with a positionally fixed section, in or on which the at least one movable stud element (11) is movably guided.

6. Disc brake (1) according to Claim 3, **characterised in that** the at least one securing element (12) comprises at least one section (12b, 12c) which is connected to the at least one stud element (11), and at least one further section (12d, 12e) which is connected to or in contact with a positionally fixed section, in or on which the at least one movable stud element (11) is movably guided.

7. Disc brake (1) according to Claim 6, **characterised in that** the at least one stud element (11) is movably guided in at least one guide slot (5c, 5'c) of the pad backing-plate (5a) of the brake pad (5) on the rear side, and the at least one section (12b, 12c) of the at least one securing element (12) which is connected to the at least one stud element (11), is permanently connected by a joint (14) to the at least one further section (12d, 12e) of the at least one securing element (12), wherein the sections (12b, 12c and 12d, 12e) so connected surround a section of the pad backing-plate (5a) and extend through an opening (5b) of the pad backing-plate (5a).

8. Disc brake (1) according to Claim 6, **characterised in that** the at least one movable stud element (11) is movably guided in at least one guide slot (5c, 5'c) of the pad backing-plate (5a) of the brake pad (5) on the rear side, and the at least one section (12b) of the at least one securing element (12) which is connected to the at least one stud element (11) is permanently connected by a joint (14) to the at least one further section (12c) of the at least one securing element (12) by a further section (12f) of the at least one securing element (12), wherein the at least one securing element (12) is arranged in an opening (5b) of the pad backing-plate (5a) on the rear side.

9. Disc brake (1) according to Claim 6, **characterised in that** the at least one movable stud element (11) is movably guided in at least one guide slot (5c, 5'c) of the pad backing-plate (5a) of the brake pad (5) on the rear side, and the at least one section (12b) of the at least one securing element (12) is connected to the at least one stud element (11), and the at least one further section (12c) is permanently attached to the pad backing-plate (5a) of the brake pad (5) on the rear side.

10. Disc brake (1) according to Claim 3, **characterised in that** the at least one securing element (12) is a shaft retaining ring, which is connected to the at least one movably guided stud element (11).

11. Disc brake (1) according to Claim 3, **characterised in that** the at least one securing element (12) is produced by a material deforming process, such as swaging, tumbling, riveting or the like, of the at least one stud element (11).

12. Disc brake (1) according to Claim 11, **characterised in that** the at least one movably guided stud element (11) is movably guided in a slot (8b) of the pad retaining clip (8) and held onto the pad retaining clip (8), wherein a head (11d) of the at least one movably guided stud element (11) is shaped as the at least one securing element (12), and wherein a foot section (11c) of the at least one movably guided stud element (11) is engaged with a guide slot (5c) of the pad backing-plate (5a) of the brake pad (5) on the rear side when in the engaged position.

13. Disc brake (1) according to any of the preceding claims, **characterised in that** an additional securing means is provided, of such type that on its underside (80) in the area of the pad backing-plate (5a) on the rear side, the pad retaining clip (8) has a stop (88) projecting from the underside (80), which stop is in contact with an edge section (70) of the pad holding spring (7) of the pad carrier plate (5a) on the rear side.

14. Disc brake (1) according to any of the preceding claims, **characterised in that** at least one of the end sections (8a, 8b) of the pad retaining clip (8) has an interlocking connection with a respectively associated bearing/holding section (9, 9a) with bevels (9d, 87) in contact with one another.

15. Brake pad set (100) for a disc brake (1) according to any of Claims 1 to 11, comprising at least one brake pad (4) on the application side and at least one brake pad (5) on the rear side, each with a respective pad backing-plate (4a, 5a) provided with a pad holder spring (6, 7), a pad retaining clip (8) and a securing device (10), **characterised in that** the securing device (10) comprises at least one movably guided stud element (11) which can be moved from a rest position to an engaged position and back again, wherein the at least one movable stud element (11) is movably guided in at least one guide slot (5c, 5'c) of the pad backing-plate (5a) of the brake pad (5) on the rear side.

16. Brake pad set (100) for a disc brake (1) according to any of Claims 1 to 3, 11, or 12, comprising at least one brake pad (4) on the application side and at least one brake pad (5) on the rear side, each with a pad backing-plate (4a, 5a) provided with a respective pad holder spring (6, 7), a pad retaining clip (8) and a securing device (10), **characterised in that** the securing device (10) comprises at least one movably guided stud element (11) which can be moved from a rest position to an engaged position and back again, wherein the at least one movable stud element (11) is movably guided in a slot (8b) of the pad retaining clip (8) and is held on the pad retaining clip (8).

## Revendications

1. Frein (1) à disque d'un véhicule, notamment d'un véhicule utilitaire, comportant un disque (2) de frein à axe (2a) de rotation, un étrier (3) de frein, notamment un étrier coulissant, à partie (3a) de serrage et à partie (3b) de dos, au moins deux garnitures (4, 5) de frein ayant, respectivement, une plaque (4a, 5a) de dos de garniture pourvue d'un ressort (6, 7) de maintien de garniture, qui sont appuyés chacun sous précontrainte par un étrier (8) de maintien de garniture fixé de manière amovible à l'étrier (3) de frein et dont une garniture (4) de frein du côté du serrage est associée à la partie (3a) de serrage et une garniture (5) de frein du côté du dos est associée à la partie (3b) de dos, ainsi qu'un système (10) de sécurité pour fixer la position de l'étrier (8) de maintien de garniture, **caractérisé en ce que** le système (10) de sécurité a au moins un élément (11) de broche guidé à coulissement, qui peut coulisser d'une position de repos à une position de pénétration, le au moins un élément (11) de broche formant, dans la position de pénétration, une liaison amovible entre l'étrier (8) de maintien de garniture et la plaque (5a) de dos du côté arrière de la garniture (5) de frein du côté arrière.

2. Frein (1) à disque suivant la revendication 1, **caractérisé en ce que** le système (10) de sécurité comprend au moins un élément (13) de ressort pour précontraindre le au moins un élément (11) de broche guidé à coulissement dans la position de pénétration, le au moins un élément (11) de broche pouvant, lors du montage/démontage, coulisser dans la position de repos à l'encontre de la force de précontrainte de l'élément (13) de ressort.

3. Frein (1) à disque suivant la revendication 1 ou 2, **caractérisé en ce que** le dispositif (10) de sécurité a au moins un élément (12) de sécurité, qui forme une limitation d'une course du au moins un élément (11) de broche.

4. Frein (1) à disque suivant la revendication 3, **caractérisé en ce que** le au moins un élément (12) de sécurité a la fonction du au moins un élément (13) de ressort pour précontraindre le au moins un élément (11) de broche guidé à coulissement.

5. Frein (1) à disque suivant la revendication 4, **caractérisé en ce que** le au moins un élément (12) de sécurité est constitué sous la forme d'une agrafe élastique, qui, par une partie (12b) est reliée au au moins un élément (11) de broche et par une autre partie (12c) à une partie fixe en position, dans ou sur laquelle le au moins un élément (11) à broche coulissant et guidé à coulissement est relié ou est en contact.

6. Frein (1) à disque suivant la revendication 3, **caractérisé en ce que** le au moins un élément (12) de sécurité a au moins une partie (12b, 12c), qui est reliée au au moins un élément (11) à broche, et au moins une autre partie (12d, 12e), qui, par une partie à poste fixe, est guidée à coulissement, reliée ou en contact, dans ou sur le au moins un élément (11) à broche coulissant.

7. Frein (1) à disque suivant la revendication 6, **caractérisé en ce que** le au moins un élément (11) à broche coulissant est guidé à coulissement dans au moins un logement (5c, 5'c) de guidage de la plaque (5a) de dos du côté arrière de la garniture (5) de frein du côté arrière et **en ce que** la au moins une partie (12b, 12c) du au moins un élément (12) de sécurité, qui est relié au au moins un élément (11) de broche, est reliée de manière inamovible en une liaison (14) avec la au moins une autre partie (12d, 12e) du au moins un élément (12) de sécurité, les parties (12b, 12c et 12d, 12e) ainsi reliées entourant une partie de la plaque (5a) de dos de garniture et passant dans une ouverture (5b) de la plaque (5a) de dos de garniture.

8. Frein (1) à disque suivant la revendication 6, **caractérisé en ce que** le au moins un élément (11) à broche coulissante est guidé à coulissement dans au moins un logement (5c, 5'c) de guidage de la plaque (5a) de dos du côté arrière de la garniture (5) de frein du côté arrière et **en ce que** la au moins une partie (12b) du au moins un élément (12) de sécurité, qui est relié au au moins un élément (11) de broche, est reliée de manière inamovible en une liaison (14) avec la au moins une autre partie (12c) du au moins un élément (12) de sécurité, par une autre partie (12f) du au moins un élément (12) de sécurité, le au moins un élément (12) de sécurité étant disposé dans une ouverture (5b) de la plaque (5a) de dos de garniture du côté du dos.

9. Frein (1) à disque suivant la revendication 6, **caractérisé en ce que** le au moins un élément (11) de broche coulissant est guidé à coulissement dans au moins un logement (5c, 5'c) de guidage de la plaque (5a) de dos du côté arrière de la garniture (5) de frein du côté arrière et **en ce que** la au moins une partie (12b) du au moins un élément (12) de sécurité est reliée au au moins un élément (11) de broche et **en ce que** la au moins une autre partie (12c) est appliquée fixement à la plaque (5a) de dos du côté arrière de la garniture (5) de frein du côté arrière.

10. Frein (1) à disque suivant la revendication 3, **caractérisé en ce que** le au moins un élément (12) de sécurité est un jonc ondulé, qui est relié au au moins un élément (11) à broche guidé à coulissement.

11. Frein (1) à disque suivant la revendication 3, **caractérisé en ce que** le au moins un élément (12) de sécurité est formé par une déformation de matériau, par exemple, par refoulement, nutation, rivetage ou analogue du au moins un élément (11) de broche.

12. Frein (1) à disque suivant la revendication 11, **caractérisé en ce que** le au moins un élément (11) de broche guidé à coulissement est guidé à coulissement dans un logement (8b) de l'étrier (8) de maintien de garniture et est maintenu à l'étrier (8) de maintien de garniture une tête (11d) du au moins un élément (11) de broche guidé à coulissement étant conformé en le au moins un élément (12) de sécurité, et une partie (11c) de pied du au moins un élément (11) de broche guidé à coulissement étant en pénétration dans la position de pénétration, avec un logement (5c) de guidage de la plaque (5a) de dos du côté arrière de la garniture (5) de frein du côté arrière.

13. Frein (1) à disque suivant l'une des revendications précédentes, **caractérisé en ce qu'**il est prévu une sécurité supplémentaire de manière à ce que l'étrier (8) de maintien de garniture est, sur son côté (80) inférieur, dans la région de la plaque (5a) de support de garniture du côté arrière, une butée (88) en saillie du côté (80) inférieur et en contact avec une partie (70) de bord, tournée vers le disque (2) du frein (1) à disque, du ressort (7) de maintien de garniture de la plaque (5a) de support de garniture du côté arrière.

14. Frein (1) à disque suivant l'une des revendications précédentes, **caractérisé en ce qu'**au moins l'une de parties (8a, 8b) d'extrémité de l'étrier (8) de maintien de garniture a une liaison à complémentarité de forme avec une partie (9, 9a) associée, respectivement, de palier/maintien, par des parties (9d, 87) inclinées en contact entre elles.

15. Jeu (100) de garniture de frein pour un frein (1) à disque suivant l'une des revendications 1 à 11, comprenant au moins une garniture (4) de frein du côté du serrage et au moins une garniture (5) de frein du côté du dos, ayant chacune une plaque (4a, 5a) de dos de garniture, pourvue d'un ressort (6, 7) de maintien de garniture, un étrier (8) de maintien de garniture et un système (10) de sécurité, **caractérisé en ce que** le système (10) de sécurité a au moins un élément (11) de broche guidé à coulissement, qui peut coulisser d'une position de repos à une position de pénétration et revenir, le au moins un élément (11) de broche coulissant étant guidé à coulissement dans au moins un logement (5c, 5'c) de guidage de la plaque (5a) de dos de la garniture (5) de frein du côté arrière.

16. Jeu (100) de garniture de frein pour un frein (1) à disque suivant l'une des revendications 1 à 3, 11 ou 12, comprenant au moins une garniture (4) de frein du côté du serrage et au moins une garniture (5) de frein du côté arrière, ayant respectivement une plaque (4a, 5a) de dos de garniture pourvue d'un ressort (6, 7) de maintien de garniture, un étrier (8) de maintien de garniture et un système (10) de fixation, **caractérisé en ce que** le système (10) de fixation a au moins un élément (11) de broche guidé à coulissement, qui peut coulisser d'une position de repos à une position de pénétration et revenir, le au moins un élément (11) de broche guidé à coulissement étant guidé à coulissement dans un logement (8b) de l'étrier (8) de maintien de garniture et étant maintenu à l'étrier (8) de maintien de garniture.
